(19) **Europäisches Patentamt / European Patent Office / Office européen des brevets**

(11) **EP 4 765 886 A1**

(12) **EUROPEAN PATENT APPLICATION**
published in accordance with Art. 153(4) EPC

(43) Date of publication:
**24.06.2026 Bulletin 2026/26**

(21) Application number: **24870408.2**

(22) Date of filing: **06.09.2024**

(51) International Patent Classification (IPC):
**H04W 4/02** (2018.01)

(52) Cooperative Patent Classification (CPC):
**H04W 4/02; H04W 24/08**

(86) International application number:
**PCT/CN2024/117411**

(87) International publication number:
**WO 2025/066862 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.09.2023 CN 202311270473**

(71) Applicant: **HUAWEI TECHNOLOGIES CO., LTD.**
**Shenzhen, Guangdong 518129 (CN)**

(72) Inventors:
• **WANG, Han**
  **Shenzhen, Guangdong 518129 (CN)**
• **HUANG, Su**
  **Shenzhen, Guangdong 518129 (CN)**
• **XIN, Rui**
  **Shenzhen, Guangdong 518129 (CN)**
• **ZHANG, Li**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **POSITIONING MEASUREMENT METHOD AND APPARATUS**

(57) This application provides a positioning measurement method and an apparatus, and relates to the field of communication technologies. The method includes: A target device receives first indication information from an LMF, where the first indication information indicates a measurement time window, a positioning reference signal PRS resource within the measurement time window belongs to at least one frequency, and the at least one frequency includes a target frequency; and the target device performs first positioning measurement on a PRS resource on the target frequency within the measurement time window based on the first indication information. According to the foregoing solution, the LMF indicates, by using the first indication information, the target device to perform the first positioning measurement on the PRS resource on the target frequency within the measurement time window.

Positioning measurement method 800

FIG. 8

**Description**

This application claims priority to Chinese Patent Application No. 202311270473.9, filed with the China National Intellectual Property Administration on September 27, 2023 and entitled "POSITIONING MEASUREMENT METHOD AND APPARATUS", which is incorporated herein by reference in its entirety.

**TECHNICAL FIELD**

This application relates to the field of communication technologies, and more specifically, to a positioning measurement method and an apparatus.

**BACKGROUND**

In a carrier phase positioning technology, positioning is performed by measuring variations of carrier phases of a reference signal as the reference signal transmits from a transmitting side to a receiving side. However, in the carrier phase positioning technology, a terminal device and a reference station (positioning reference unit, PRU) need to simultaneously measure a reference signal sent by a base station, to eliminate some error terms varying over time. Downlink positioning is used as an example. A location management function (location management function, LMF) network element on a network side may configure a measurement time window for the terminal device and the PRU, and indicate the terminal device and the PRU to measure a downlink reference signal resource set within the measurement time window. However, the terminal device and the PRU cannot simultaneously measure the reference signal sent by the base station. As a result, positioning measurement accuracy is not high.
Therefore, how to improve positioning measurement accuracy is an urgent problem to be resolved.

**SUMMARY**

This application provides a positioning measurement method and an apparatus, to improve positioning measurement accuracy.
According to a first aspect, a positioning measurement method is provided. The method may be performed by a target device. The target device may be a terminal device or a positioning aid device, a component (for example, a processor, a chip, or a chip system) in the terminal device or the positioning aid device, a logical module or software that can implement all or some functions of the terminal device, or a logical module or software that can implement all or some functions of the positioning aid device. The method includes: The target device receives first indication information from an LMF, where the first indication information indicates a measurement time window, a positioning reference signal (positioning reference signal, PRS) resource within the measurement time window belongs to at least one frequency, and the at least one frequency includes a target frequency; and the target device performs first positioning measurement on a PRS resource on the target frequency within the measurement time window based on the first indication information.
The PRS resource may be understood as a PRS resource or a PRS resource set.
According to the foregoing solution, the LMF indicates, by using the first indication information, the target device to perform the first positioning measurement on the PRS resource on the target frequency within the measurement time window. This avoids the target device arbitrarily selecting a frequency from a plurality of frequencies within the measurement time window for positioning measurement, and prevents the target device from measuring different frequencies within a same measurement time window, thereby improving positioning measurement accuracy.
With reference to the first aspect, in some implementations of the first aspect, each PRS resource within the measurement time window belongs to the target frequency.
When there are resource sets on a plurality of frequencies within a same measurement time window, the target device needs to separately measure and report the PRS resource sets on the plurality of frequencies during measurement and reporting. Consequently, processing complexity is high. In this embodiment of this application, each PRS resource within the measurement time window belongs to one frequency, so that processing complexity of performing positioning measurement by the target device can be reduced, thereby improving positioning measurement efficiency. In addition, the foregoing solution is applicable to a terminal device that can measure only one frequency within one measurement time window. This improves applicability of the positioning measurement method.
With reference to the first aspect, in some implementations of the first aspect, that the target device performs the first positioning measurement on the PRS resource on the target frequency within the measurement time window based on the first indication information includes: The target device performs the first positioning measurement only on the PRS resource on the target frequency within the measurement time window.
According to the foregoing solution, the LMF may indicate the target device to perform positioning measurement only on the PRS resource on the target frequency within the measurement time window. This avoids a case in which the target device measures different frequencies within a same measurement time window, to improve positioning measurement accuracy.

With reference to the first aspect, in some implementations of the first aspect, before the target device performs the first positioning measurement only on the PRS resource on the target frequency within the measurement time window, the method further includes: The target device sends first capability information to the LMF, where the first capability information indicates that the target device is capable of measuring one frequency within the measurement time window.

According to the foregoing solution, when the target device can measure only one frequency within the measurement time window, the LMF may indicate the target device to perform positioning measurement only on the PRS resource on the target frequency within the measurement time window. The foregoing solution implements positioning measurement of a low-capability target device, and is applicable to a terminal device that can measure only one frequency within one measurement time window. This improves applicability of the positioning measurement method.

With reference to the first aspect, in some implementations of the first aspect, that the target device performs the first positioning measurement on the PRS resource on the target frequency within the measurement time window based on the first indication information includes: The target device performs the first positioning measurement preferentially on the PRS resource on the target frequency within the measurement time window.

According to the foregoing solution, the LMF may indicate the target device to perform positioning measurement preferentially on the PRS resource on the target frequency within the measurement time window. This avoids a case in which the target device measures different frequencies within a same measurement time window, to improve positioning measurement accuracy.

With reference to the first aspect, in some implementations of the first aspect, before the target device performs the first positioning measurement preferentially on the PRS resource on the target frequency within the measurement time window, the method further includes: The target device sends second capability information to the LMF, where the second capability information indicates that the target device is capable of measuring a plurality of frequencies within the measurement time window.

According to the foregoing solution, when the target device can measure a plurality of frequencies within the measurement time window, the LMF may indicate the target device to perform positioning measurement preferentially on the PRS resource on the target frequency within the measurement time window. The foregoing solution avoids a case in which the target device measures different frequencies within a same measurement time window, to improve positioning measurement accuracy.

With reference to the first aspect, in some implementations of the first aspect, PRS resources within the measurement time window belong to a plurality of frequencies, the first indication information further carries priorities, and the priorities indicate a sequence of performing the first positioning measurement on the plurality of frequencies within the measurement time window.

According to the foregoing solution, the LMF indicates, by using the priorities, the target device to perform the first positioning measurement on the PRS resources on the plurality of frequencies within the measurement time window based on a specific sequence. This avoids the target device arbitrarily selecting a frequency from the plurality of frequencies within the measurement time window for positioning measurement, and prevents the target device from measuring different frequencies within a same measurement time window, thereby improving positioning measurement accuracy.

With reference to the first aspect, in some implementations of the first aspect, the PRS resource on the target frequency belongs to a same positioning frequency layer (positioning frequency layer, PFL).

With reference to the first aspect, in some implementations of the first aspect, the first indication information is carried in a positioning request or assistant data.

With reference to the first aspect, in some implementations of the first aspect, the method further includes: The target device receives second indication information from the LMF, where the second indication information indicates the target device to perform second positioning measurement on a plurality of PRS resources; and the target device preforms the second positioning measurement preferentially on the PRS resource on the target frequency in the plurality of PRS resources based on the second indication information and the first indication information.

According to the foregoing solution, the target device measures the PRS resource preferentially on the target frequency. This avoids the target device arbitrarily selecting a frequency from a plurality of frequencies for positioning measurement, so that a case in which the target device measures different frequencies can be avoided, thereby improving positioning measurement accuracy. In addition, when performing the second positioning measurement, the target device is not limited to measuring the PRS resource on the target frequency within the measurement time window, so that a finally determined measurement result of the second positioning measurement is more accurate, thereby improving overall positioning accuracy on the terminal device.

With reference to the first aspect, in some implementations of the first aspect, the first indication information and the second indication information are carried in same information.

With reference to the first aspect, in some implementations of the first aspect, the PRS resource on the target frequency within the measurement time window is associated with information about a reference network device.

According to the foregoing solution, the PRS resource on the target frequency within the measurement time window is associated with the information about the reference network device, so that the target device can report a measurement result obtained through differential processing is performed based on the reference network device. This avoids reporting a large quantity of measurement results for a single PRS to the LMF, thereby reducing communication overheads, and reducing processing burden on the LMF side.

With reference to the first aspect, in some implementations of the first aspect, the target device includes a terminal device on which positioning measurement is to be performed and/or a positioning aid device.

According to a second aspect, a positioning measurement method is provided. The method may be performed by an LMF, may be performed by a component (for example, a processor, a chip, or a chip system) in the LMF, or may be performed by a logical module or software that can implement all or some functions of the LMF. The method includes: The LMF sends first indication information to a target device, where the first indication information indicates a measurement time window, a PRS resource within the measurement time window belongs to at least one frequency, the at least one frequency includes a target frequency, and the first indication information further indicates the target device to perform first positioning measurement on a PRS resource on the target frequency within the measurement time window.

According to the foregoing solution, the LMF indicates, by using the first indication information, the target device to perform the first positioning measurement on the PRS resource on the target frequency within the measurement time window. This avoids the target device arbitrarily selecting a frequency from a plurality of frequencies within the measurement time window for positioning measurement, and prevents the target device from measuring different frequencies within a same measurement time window, thereby improving positioning measurement accuracy.

With reference to the second aspect, in some implementations of the second aspect, the method further includes: The LMF receives first capability information from the target device, where the first capability information indicates that the target device is capable of measuring one frequency within the measurement time window, and the first indication information specifically indicates the target device to perform the first positioning measurement only on the PRS resource on the target frequency within the measurement time window.

According to the foregoing solution, when the target device can measure only one frequency within the measurement time window, the LMF may indicate the target device to perform positioning measurement only on the PRS resource on the target frequency within the measurement time window. The foregoing solution implements positioning measurement of a low-capability target device, and avoids a case in which the target device measures different frequencies within a same measurement time window, to improve positioning measurement accuracy. In addition, the foregoing solution is applicable to a terminal device that can measure only one frequency within one measurement time window. This improves applicability of the positioning measurement method.

With reference to the second aspect, in some implementations of the second aspect, the method further includes: The LMF receives second capability information from the target device, where the second capability information indicates that the target device is capable of measuring a plurality of frequencies within the measurement time window, and the first indication information specifically indicates the target device to perform the first positioning measurement preferentially on the PRS resource on the target frequency within the measurement time window.

According to the foregoing solution, when the target device can measure a plurality of frequencies within the measurement time window, the LMF may indicate the target device to perform positioning measurement preferentially on the PRS resource on the target frequency within the measurement time window. The foregoing solution avoids a case in which the target device measures different frequencies within a same measurement time window, to improve positioning measurement accuracy.

With reference to the second aspect, in some implementations of the second aspect, the method further includes: The LMF sends second indication information to the target device, where the second indication information indicates the target device to perform second positioning measurement on a plurality of PRS resources, and the first indication information further indicates that second positioning measurement on the PRS resource on the target frequency is prioritized over second positioning measurement on a PRS resource on a frequency other than the target frequency.

According to the foregoing solution, the target device measures the PRS resource preferentially on the target frequency. This avoids the target device arbitrarily selecting a frequency from a plurality of frequencies for positioning measurement, so that a case in which the target device measures different frequencies can be avoided, thereby improving positioning measurement accuracy. In addition, when performing the second positioning measurement, the target device is not limited to measuring the PRS resource on the target frequency within the measurement time window, so that a finally determined measurement result of the second positioning measurement is more accurate, thereby improving overall positioning accuracy on a terminal device.

According to a third aspect, a positioning measurement method is provided. The method may be performed by a network device or an LMF, may be performed by a component (for example, a processor, a chip, or a chip system) in the network device or the LMF, may be performed by a logical module or software that can implement all or some functions of the network device, or may be performed by a logical module or software that can implement all or some functions of the LMF. The method includes: The LMF sends first information to the network device, where the first information carries a measurement time window, a sounding reference signal (sounding reference signal, SRS) resource within the measurement time window belongs to at least one frequency, and the at least one frequency includes a target frequency; and the network device performs first positioning measurement on an SRS resource on the target frequency within the measurement time window based on the first information.

The SRS resource may be understood as an SRS resource, an SRS resource set, or a bandwidth part (bandwidth part, BWP).

According to the foregoing solution, the LMF indicates, by using the first information, the network device to perform the first positioning measurement on the SRS resource on the target frequency within the measurement time window. This avoids a case in which the network device randomly selects a frequency from a plurality of frequencies within the measurement time window for positioning measurement, so that a case in which each network device measures different frequencies within a same measurement time window can be avoided, thereby improving positioning measurement accuracy.

With reference to the third aspect, in some implementations of the third aspect, each SRS resource within the measurement time window belongs to the target frequency.

When there are resource sets on a plurality of frequencies within a same measurement time window, the network device needs to separately measure and report the SRS resource sets on the plurality of frequencies during measurement and reporting. Consequently, processing complexity is high. In this embodiment of this application, each SRS resource within the measurement time window belongs to one frequency, so that processing complexity of performing positioning measurement by the network device can be reduced, thereby improving positioning measurement efficiency.

With reference to the third aspect, in some implementations of the third aspect, that the network device performs the first positioning measurement on the SRS resource on the target frequency within the measurement time window based on the first information includes: The network device performs the first positioning measurement only on the SRS resource on the target frequency within the measurement time window.

According to the foregoing solution, the LMF may indicate the network device to perform positioning measurement only on the SRS resource on the target frequency within the measurement time window. This avoids a case in which the network device measures different frequencies within a same measurement time window, to improve positioning measurement accuracy.

With reference to the third aspect, in some implementations of the third aspect, that the network device performs the first positioning measurement on the SRS resource on the target frequency within the measurement time window based on the first information includes: The network device performs the first positioning measurement preferentially on the SRS resource on the target frequency within the measurement time window.

According to the foregoing solution, the LMF may indicate the network device to perform positioning measurement preferentially on the SRS resource on the target frequency within the measurement time window. The foregoing solution avoids a case in which the network device measures different frequencies within a same measurement time window, to improve positioning measurement accuracy.

With reference to the third aspect, in some implementations of the third aspect, SRS resources within the measurement time window belong to a plurality of frequencies, the first information further carries priorities, and the priorities indicate a sequence of performing the first positioning measurement on the plurality of frequencies within the measurement time window.

According to the foregoing solution, the LMF indicates, by using the priorities, the network device to perform the first positioning measurement on the SRS resources on the plurality of frequencies within the measurement time window based on a specific sequence. This avoids a case in which the network device randomly selects a frequency from the plurality of frequencies within the measurement time window for positioning measurement, so that a case in which the network device measures different frequencies within a same measurement time window can be avoided, thereby improving positioning measurement accuracy.

With reference to the third aspect, in some implementations of the third aspect, the SRS resource on the target frequency belongs to a same component carrier (component carrier, CC).

With reference to the third aspect, in some implementations of the third aspect, the first information is carried in a measurement request.

With reference to the third aspect, in some implementations of the third aspect, the method further includes: The LMF sends second information to the network device, where the second information indicates the network device to perform second positioning measurement on a plurality of SRS resources; and the network device performs the second positioning measurement preferentially on the SRS resource on the target frequency in the plurality of SRS resources based on the second information and the first information.

According to the foregoing solution, the network device measures the SRS resource preferentially on the target frequency. This avoids a case in which the network device randomly selects a frequency from a plurality of frequencies for positioning measurement, so that a case in which the network device measures different frequencies can be avoided, thereby improving positioning measurement accuracy. In addition, when performing the second positioning measurement, the network device is not limited to measuring the SRS resource on the target frequency within the measurement time window, so that a finally determined measurement result of the second positioning measurement is more accurate, thereby improving overall positioning accuracy on a terminal device.

According to a fourth aspect, a communication apparatus is provided. The communication apparatus may be an LMF, or may be a device, a module, or the like configured to perform a function of the LMF. The communication apparatus may be a target device, or may be a device, a module, or the like configured to perform a function of the target device. The communication apparatus may be a network device, or may be a device, a module, or the like configured to perform a function of the network device.

In a possible implementation, the communication apparatus may include modules or units that are in one-to-one correspondence with the method/operations/steps/actions described in the first aspect. The module or unit may be implemented by a hardware circuit, software, or a combination of the hardware circuit and the software.

For example, the communication apparatus includes: a transceiver unit, configured to receive first indication information from an LMF, where the first indication information indicates a measurement time window, a PRS resource within the measurement time window belongs to at least one frequency, and the at least one frequency includes a target frequency; and a processing unit, configured to perform first positioning measurement on a PRS resource on the target frequency within the measurement time window based on the first indication information.

In some implementations, the processing unit is specifically configured to perform the first positioning measurement only on the PRS resource on the target frequency within the measurement time window.

In some implementations, the transceiver unit is further configured to send first capability information to the LMF, where the first capability information indicates that the target device is capable of measuring one frequency within the measurement time window.

In some implementations, the processing unit is specifically configured to perform the first positioning measurement preferentially on the PRS resource on the target frequency within the measurement time window.

In some implementations, the transceiver unit is further configured to send second capability information to the LMF, where the second capability information indicates that the target device is capable of measuring a plurality of frequencies within the measurement time window.

In some implementations, the transceiver unit is further configured to receive second indication information from the LMF, where the second indication information indicates the target device to perform second positioning measurement on a plurality of PRS resources, where the processing unit is further configured to perform the second positioning measurement preferentially on the PRS resource on the target frequency in the plurality of PRS resources based on the second indication information and the first indication information.

In another possible implementation, the communication apparatus may include modules or units that are in one-to-one correspondence with the method/operations/steps/actions described in the second aspect. The module or unit may be implemented by a hardware circuit, software, or a combination of the hardware circuit and the software.

For example, the communication apparatus includes: a transceiver unit, configured to send first indication information to a target device, where the first indication information indicates a measurement time window, a PRS resource within the measurement time window belongs to at least one frequency, the at least one frequency includes a target frequency, and the first indication information further indicates the target device to perform first positioning measurement on a PRS resource on the target frequency within the measurement time window.

In some implementations, the transceiver unit is further configured to receive first capability information from the target device, where the first capability information indicates that the target device is capable of measuring one frequency within the measurement time window, and the first indication information specifically indicates the target device to perform the first positioning measurement only on the PRS resource on the target frequency within the measurement time window.

In some implementations, the transceiver unit is further configured to receive second capability information from the target device, where the second capability information indicates that the target device is capable of measuring a plurality of frequencies within the measurement time window, and the first indication information specifically indicates the target device to perform the first positioning measurement preferentially on the PRS resource on the target frequency within the measurement time window.

In some implementations, the transceiver unit is further configured to send second indication information to the target device, where the second indication information indicates the target device to perform second positioning measurement on a plurality of PRS resources, and the first indication information further indicates that second positioning measurement on the PRS resource on the target frequency is prioritized over second positioning measurement on a PRS resource on a frequency other than the target frequency.

In still another possible implementation, the communication apparatus may include modules or units that are in one-to-one correspondence with the method/operations/steps/actions described in the third aspect. The module or unit may be implemented by a hardware circuit, software, or a combination of the hardware circuit and the software.

According to a fifth aspect, a communication apparatus is provided, including a processor. The processor is configured to cause, by executing a computer program or instructions or through a processing circuit, the communication apparatus to perform the method according to any one of the first aspect and the possible implementations of the first aspect; the communication apparatus to perform the method according to any one of the second aspect and the possible implementations of the second aspect; or the communication apparatus to perform the method according to any one of the third aspect and the possible implementations of the third aspect.

In a possible implementation, the communication apparatus further includes a memory, configured to store the computer program or the instructions. Further, the processor is specifically configured to invoke and run the computer program or the computer instructions stored in the memory, so that the processor implements any one of the implementations of the first aspect, the second aspect, or the third aspect.

In a possible implementation, the communication apparatus further includes a communication interface, configured to input and/or output a signal.

In a possible implementation, the communication apparatus further includes a transceiver, and the processor is configured to control the transceiver to receive and send signals.

According to a sixth aspect, a communication apparatus is provided, and includes a processing circuit (which may also be referred to as a processor) and an input/output interface (which may also be referred to as an interface circuit). The input/output interface is configured to input and/or output a signal. The processing circuit is configured to perform the method according to any one of the first aspect and the possible implementations of the first aspect, the processing circuit is configured to perform the method according to any one of the second aspect and the possible implementations of the second aspect, or the processing circuit is configured to perform the method according to any one of the third aspect and the possible implementations of the third aspect.

In a possible implementation, the processor is configured to: communicate with another apparatus through the interface circuit, and perform the method according to any one of the first aspect, the second aspect, or the third aspect. There are one or more processors.

According to a seventh aspect, a computer-readable storage medium is provided. The computer-readable storage medium stores a computer program or instructions. When the computer program or the instructions are run on a computer, the method according to any one of the first aspect and the possible implementations of the first aspect is performed; the method according to any one of the second aspect and the possible implementations of the second aspect is performed; or the method according to any one of the third aspect and the possible implementations of the third aspect is performed.

According to an eighth aspect, a computer program product is provided, including a computer program or instructions. When the computer program or instructions are run on a computer, the method according to any one of the first aspect and the possible implementations of the first aspect is performed; the method according to any one of the second aspect and the possible implementations of the second aspect is performed; or the method according to any one of the third aspect and the possible implementations of the third aspect is performed.

According to a ninth aspect, a communication apparatus is provided, and includes a processor, configured to connect to a memory, and configured to invoke a program stored in the memory, to perform the method according to any one of the possible implementations of the first aspect, the second aspect, or the third aspect. The memory may be located inside the communication apparatus, or may be located outside the communication apparatus. In addition, there are one or more processors.

In an implementation, the communication apparatus in the fifth aspect, the sixth aspect, or the ninth aspect may be a chip or a chip system.

According to a tenth aspect, a chip apparatus is provided, and includes a processor, configured to invoke a computer program or computer instructions in a memory, to cause the processor to perform any one of the implementations according to any one of the first aspect to the third aspect.

Optionally, the processor is coupled to the memory through an interface.

According to an eleventh aspect, a communication system is provided. The communication system includes a target device and an LMF. The target device is configured to perform the method shown in the first aspect, and the LMF is configured to perform the method shown in the second aspect.

According to a twelfth aspect, a communication system is provided. The communication system includes a network device and an LMF. The network device and the LMF are configured to perform the method shown in the third aspect.

For descriptions of beneficial effects of any one of the fourth aspect to the twelfth aspect, refer to the descriptions of the beneficial effects of the first aspect, the second aspect, or the third aspect.

## BRIEF DESCRIPTION OF DRAWINGS

FIG. 1 is a diagram of a communication system to which an embodiment of this application is applied;

FIG. 2 is a diagram of another communication system to which an embodiment of this application is applied;

FIG. 3 is a schematic flowchart of a positioning measurement method;

FIG. 4 is a diagram of an uplink-time difference of arrival (uplink-time difference of arrival, UL-TDOA) positioning technology;

FIG. 5 is a diagram of carrier phase ranging;

FIG. 6 is a diagram of performing positioning measurement by using a double-difference carrier phase method.

FIG. 7 is a diagram of configuring a measurement time window.

FIG. 8 is a schematic flowchart of a positioning measurement method according to an embodiment of this application;

FIG. 9 is a schematic flowchart of another positioning measurement method according to an embodiment of this application;

FIG. 10 is a schematic flowchart of still another positioning measurement method according to an embodiment of this application;

FIG. 11 is a schematic flowchart of yet another positioning measurement method according to an embodiment of this application;

FIG. 12 is a block diagram of a communication apparatus according to an embodiment of this application;

FIG. 13 is a block diagram of another communication apparatus according to an embodiment of this application;

FIG. 14 is a block diagram of still another communication apparatus according to an embodiment of this application; and

FIG. 15 is a block diagram of yet another communication apparatus according to an embodiment of this application.

## DESCRIPTION OF EMBODIMENTS

The following describes technical solutions of this application with reference to accompanying drawings.

The technical solutions provided in this application may be applied to various communication systems, such as a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system. This is not limited in this application.

In embodiments of this application, a network device may be any device having a wireless transceiver function. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), a next generation base station node (next generation Node Base station, gNB) or a transmission point (a TRP or a TP) in a 5G system such as an NR system, one antenna panel or one group of antenna panels (including a plurality of antenna panels) of a base station in a 5G system, a network node that forms a gNB or a transmission point, for example, a baseband unit (BBU) or a distributed unit (distributed unit, DU), or a base station in a 6G communication system.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and a service, and implements functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer eventually becomes information at the PHY layer, or is converted from the information at the PHY layer. Therefore, in the architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The network device provides a service for a cell, and a terminal device uses a transmission resource allocated by the network device (for example, a frequency domain resource, or a spectrum resource) to communicate with the cell. The cell may belong to a macro base station (for example, a macro eNB or a macro gNB), or may belong to a base station corresponding to a small cell (small cell). The small cell herein may include: a metro cell (metro cell), a micro cell (micro cell), a pico cell (pico cell), a femto cell (femto cell), or the like. These small cells have characteristics of small coverage and low transmit power, and are applicable to providing a high-speed data transmission service.

In embodiments of this application, the terminal device may also be referred to as a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may be a device that provides voice/data connectivity for a user, for example, a handheld device or a vehicle-mounted device that has a wireless connection function. Currently, some examples of the terminal may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device (handset) having a wireless communication function, a compute device or another processing device connected to a wireless modem, a vehicle-mounted device, a wearable device, a terminal device in a 5G network, or a terminal device in a future evolved public land mobile network (public land mobile network, PLMN). The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full functions and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, the terminal device may alternatively be a terminal device in an internet of things (internet of things, IoT) system. IoT is an important part of future information technology development. A main technical feature of the IoT is to connect an object to a network by using a communication technology, to implement an intelligent network for human-machine interconnection and thing-thing interconnection. The IoT technology may use, for example, a narrow band (narrow band, NB) technology to achieve massive connections, in-depth coverage, and power saving for terminals.

In addition, the terminal device may alternatively be a mobile station (mobile station, MS), a subscriber unit (subscriber unit), a smartphone (smartphone), a wireless data card, a wireless modem (modem), a laptop computer (laptop computer), a machine type communication (machine type communication, MTC) terminal, or the like.

The reference signal in embodiments of this application may include a downlink reference signal, a sidelink reference signal (side link reference signal, SL-RS), and/or an uplink reference signal.

The downlink reference signal may be a reference signal sent by the network device to the terminal device. The downlink reference signal may include one or more of the following: a PRS dedicated to positioning proposed in R16, a downlink reference signal (for example, a synchronization signal/physical broadcast channel block (synchronization signal/physical broadcast channel block, SSB), a channel state information reference signal (channel state information reference signal, CSI-RS), a tracking reference signal (tracking reference signal, TRS), or a downlink demodulation reference signal (downlink demodulation reference signal, DL-DMRS)), another future downlink reference signal, or the like proposed in another version. This is not specifically limited in embodiments of this application. For example, the downlink reference signal may further include a downlink cell-specific reference signal (cell-specific reference signal, CRS), a downlink terminal device-specific reference signal (UE-specific reference signal, UE-RS), a downlink channel measurement channel state information reference signal (channel state information reference signal, CSI-RS), a downlink group-specific reference signal (group-specific reference Signal, GRS), a downlink beam reference signal (beam reference signal, BRS), a downlink beam refinement reference signal (beam refinement reference signal, BRRS), a downlink phase compensation reference signal (phase compensation reference signal, PCRS), a downlink path loss reference signal (pathloss reference signal, PL-RS), or the like. The downlink UE-RS is also referred to as a downlink demodulation reference signal (demodulation reference signal, DMRS).

The uplink reference signal includes a demodulation reference signal (demodulation reference signal, DMRS) used for uplink demodulation, an SRS used for uplink channel measurement, an uplink PCRS, or the like. A DMRS used for physical uplink control channel (physical uplink control channel, PUCCH) demodulation is referred to as a PUCCH DMRS, and a DMRS used for physical uplink shared channel (physical uplink shared channel, PUSCH) demodulation is referred to as a PUSCH DMRS.

In descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in descriptions of this application, unless otherwise specified, "a plurality of" means two or more than two. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, b and c, a and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, words such as "example" or "for example" are used to represent an example or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

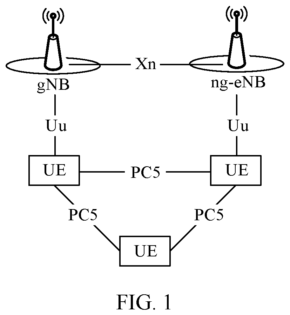

FIG. 1 is a diagram of a communication system 100 to which an embodiment of this application is applied.

As shown in FIG. 1, the communication system 100 includes a terminal device (represented as a UE in FIG. 1) and a radio access network (represented as a gNB and a next generation evolved NodeB (next generation evolved NodeB, ng-eNB) in FIG. 1). The ng-eNB indicates an LTE base station that accesses a 5G core network, and the gNB indicates a 5G base station that accesses the 5G core network. It should be understood that the communication system 100 shown in FIG. 1 may include one or more base stations (including the ng-eNB or the gNB), and may further include one or more terminal devices, for example, include one or more terminal device groups. This is not shown in FIG. 1. This is not limited in this application. It should be understood that communication between an ng-eNB and a gNB, two ng-eNBs, or two gNBs is performed through an Xn interface. The Xn interface may also be referred to as an XnAP interface. Communication between the gNB or the Ng-eNB and the UE is performed through an air interface (the radio interface between UTRAN and ue, Uu interface), and communication between UEs is performed through a proximity-based services communication 5 (proximity-based services communication 5, PC5) interface.

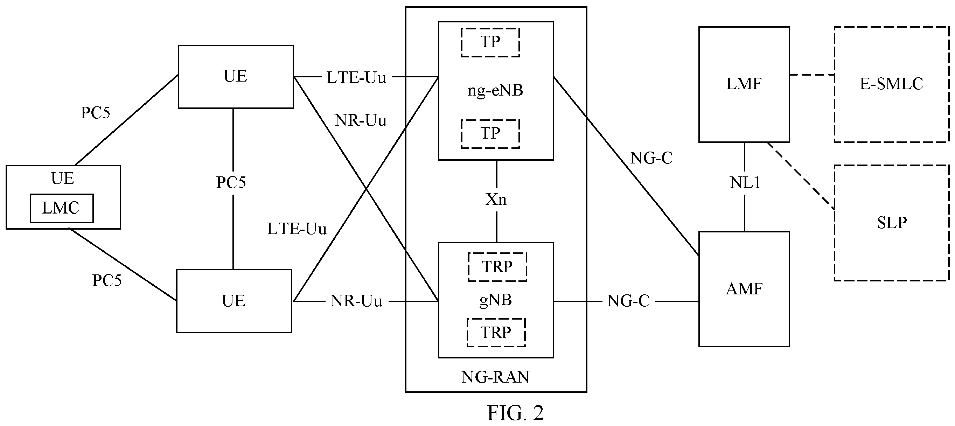

FIG. 2 is a diagram of another communication system 200 to which an embodiment of this application is applied.

As shown in FIG. 2, the communication system 200 includes a terminal device (represented as a UE in FIG. 2), a radio access network (represented as a next generation radio access network (next generation radio access network, NG-RAN) in FIG. 2), and a core network.

The radio access network includes one or more ng-eNBs and gNBs. The radio access network is connected to the core network through an NG-C interface. The radio access network can send and receive PRSs, and obtain related measurement information.

The core network includes an access and mobility management function (access and mobility management function, AMF), a location management function (location management function, LMF), and other functions.

The LMF is responsible for supporting different types of location services related to the UE, including positioning of the UE and transmission of assistant data to the UE. A control plane and a user plane of the LMF are respectively an enhance-serving mobile location center (enhance-serving mobile location center, E-SMLC) and a secure user plane location platform (secure user plane location platform, SLP). The LMF may perform signal interaction with the UE and the RAN, for example, the ng-eNB or the gNB. For example, information is exchanged between the LMF and the ng-eNB or the gNB in a new radio positioning protocol annex (new radio positioning protocol annex, NRPPa) message. For example, configuration information of a PRS or an SRS, cell timing, cell location information, and the like are obtained. For another example, UE capability information, assistance information, measurement information, and the like are transferred between the LMF and the UE in an LTE positioning protocol (LTE positioning protocol, LPP) message.

The AMF may receive, from a location service (location service, LCS) entity of the 5G core network (5G core, 5GC) or another network element, a location service request related to the UE, or the AMF may start some location services on behalf of a specific UE; and forward the location service request to the LMF.

The terminal device is connected to the radio access network via the ng-eNB through an LTE-Uu interface. The terminal device may alternatively be connected to the radio access network via the gNB through an NR-Uu interface.

It should be understood that the communication system 200 may include one or more base stations (including the ng-eNB or the gNB). It should be further understood that the communication system 200 may include one or more terminal devices, for example, include one or more terminal device groups.

It should be further understood that one gNB may send data or control signaling to one or more terminal devices. A plurality of gNBs may simultaneously send data or control signaling to one terminal device. It should be understood that the ng-eNB in FIG. 2 may alternatively be a TRP or a TP, and the nNB may alternatively be a TRP, a transmission measurement function (transmission measurement function, TMF), or the like.

Embodiments of this application may also be applied to a communication architecture based on a PC5 interface. For example, the UE may include a location management component (location management component, LMC). The LMC is a component/an application that is deployed on the UE and that has some LMF functions, and is configured to support a positioning service on the PC5 interface.

Positioning is an important function in a mobile communication system, and requires the system to provide location information of a user in real time. A 5G communication system has a high-accuracy positioning requirement on the positioning, and requires an outdoor positioning error to be less than 10 meters and an indoor positioning error to be less than 1 meter.

A positioning technology may include uplink positioning, downlink positioning, and uplink and downlink positioning. In the uplink positioning, a base station measures an SRS signal sent by a UE. In the downlink positioning, the UE measures a PRS signal sent by the base station. In the uplink and downlink positioning, the UE is required to measure the PRS signal sent by the base station, and the base station is required to measure the SRS signal sent by the UE.

The related technical solutions support a plurality of positioning technologies such as a downlink-time difference of arrival (downlink-time difference of arrival, DL-TDOA) positioning technology, a downlink-angle of departure (downlink-angle of departure, DL-AOD) positioning technology, a UL-TDOA positioning technology, an uplink-angle of arrival (uplink-angle of arrival, UL-AOA) positioning technology, and a multi-round trip time (multi-round trip time, multi-RTT) positioning technology. The DL-TDOA, the UL-TDOA, and the multi-RTT are time-of-arrival-based positioning technologies. To be specific, a receiving side needs to measure time of arrival of a signal sent by a transmitting side, and then convert the time of arrival into information about a distance between the receiving side and the transmitting side, to finally obtain a location of a to-be-positioned target. The DL-AOD and the UL-AOA are angle-based positioning technologies. To be specific, a receiving side measures an angle of arrival of a reference signal sent by a transmitting side, and infers a location of the receiving side based on angle information between the receiving side and a plurality of transmitting sides whose locations are known.

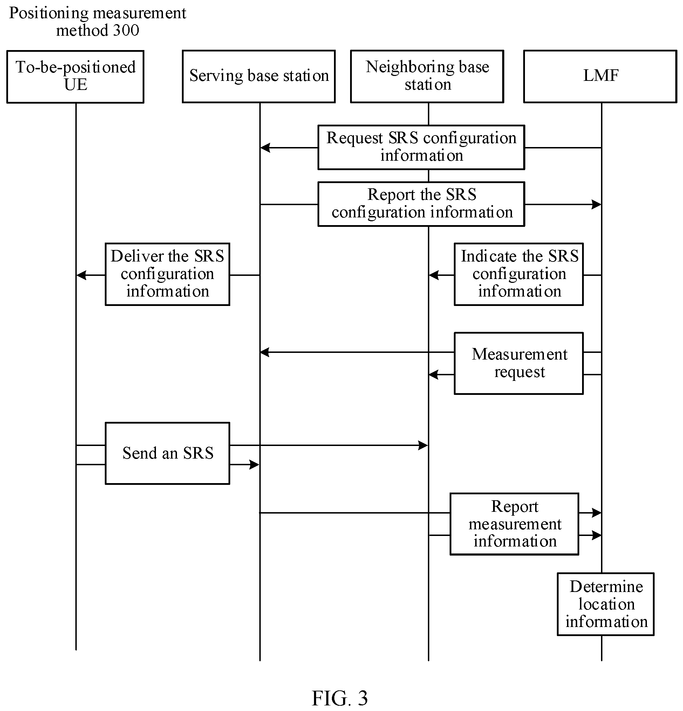

FIG. 3 is a schematic flowchart of a positioning measurement method 300. With reference to FIG. 3, the following describes a positioning procedure by using a UL-TDOA as an example.

In the UL-TDOA, an uplink reference signal needs to be measured on a base station side (namely, a network device side), for example, time of arrival of an SRS sent by a to-be-positioned UE is measured. With reference to FIG. 3, a measurement process generally includes the following processes.

An LMF requests SRS configuration information from a serving base station, and the serving base station feeds back the SRS configuration information to the LMF. The serving base station sends the SRS configuration information to the to-be-positioned UE, and the LMF indicates the SRS configuration information to a neighboring base station. The LMF sends a measurement request to the serving base station and the neighboring base station. After receiving the measurement request from the LMF, the serving base station and the neighboring base station separately receive the SRS sent by the to-be-positioned UE, and separately measure the time of arrival of the SRS. The serving base station and the neighboring base station separately report measurement information to the LMF, and the LMF performs location estimation by using the time of arrival in the received measurement information, and determines location information of the to-be-positioned UE.

The serving base station is a base station in a cell in which the to-be-positioned UE is located, and the serving base station may provide a communication connection service for the to-be-positioned UE. There are at least two neighboring base stations. The neighboring base station may be a base station in a cell in which the to-be-positioned UE is located or may be a base station in another cell. Alternatively, a part of the neighboring base station may be a base station in a cell in which the to-be-positioned UE is located, and a part of the neighboring base station may be a base station in another cell. The LMF may calculate a location of the to-be-positioned UE based on the measurement information of the serving base station and the measurement information of the neighboring base station. The following describes a positioning principle and a calculation process.

A UL-TDOA positioning principle is that a transmit source that transmits a radio signal is positioned through measurement on a difference between time at which an SRS arrives at different base stations. Specifically, the LMF calculates a difference between time at which the SRS arrives at two base stations, and obtains a distance difference based on the time difference, to obtain a hyperbola. The LMF may obtain two or more hyperbolas by using time differences measured by using three or more base stations. Further, the LMF positions the transmit source based on an intersection point of the two or more hyperbolas.

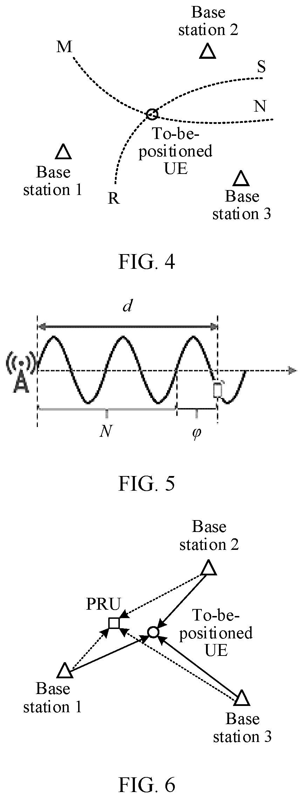

FIG. 4 is a diagram of a UL-TDOA positioning technology. A to-be-positioned UE in FIG. 4 may send an SRS. A base station 1, a base station 2, and a base station 3 in FIG. 4 correspond to the serving base station and the neighboring base stations that measure the SRS in the foregoing UL-TDOA positioning technology. One of the base station 1, the base station 2, and the base station 3 is a serving base station of a terminal device, and the other two base stations are neighboring base stations of the terminal device. With reference to FIG. 4, the to-be-positioned UE sends the SRS, and the base station 1, the base station 2, and the base station 3 separately measure the SRS sent by the to-be-positioned UE.

It is assumed that locations of the three base stations are known. Coordinates of an $i^{th}$ base station are defined as $(x_i, y_i)$, where i=1, 2, or 3. Coordinates of the to-be-positioned UE are $(x_{UE}, y_{UE})$, the base station 1 is used as a reference base station, and time of arrival of the SRS measured by the other two base stations is $t_i$. In this case, a time difference of arrival between the base station 2 and the base station 1 and a time difference of arrival between the base station 3 and the base station 1 are respectively $\Delta t_{i1}$. According to a definition of a hyperbola (a distance between two fixed points is a constant), if the to-be-positioned UE is located on a hyperbola that uses the base station 2 and the base station 3 as focuses, the following equation set may be listed.

$$\sqrt{(X_1 - x_{UE})^2 + (y_1 - y_{UE})^2} - \sqrt{(x_2 - x_{UE})^2 + (y_2 - y_{UE})^2} = c * \Delta t_{21}$$

$$\sqrt{(x_1 - x_{UE})^2 + (y_1 - y_{UE})^2} - \sqrt{(x_3 - x_{UE})^2 + (y_3 - y_{UE})^2} = c * \Delta t_{31}$$

In the two equations, c is a speed of light. Because there are only two unknowns $(x_{UE}, y_{UE})$, location information of the to-be-positioned UE can be obtained by solving the two equations. Actually, due to existence of a measurement error, the foregoing equations usually do not have an analytical solution, and an optimization algorithm like a least square algorithm or a particle swarm filter algorithm is used in engineering to estimate optimal solutions of the foregoing two equations.

In other words, a difference between time at which the SRS sent by the to-be-positioned UE arrives at the base station 1 and the base station 2 is $\Delta t_{21}$, and a difference between time at which the SRS sent by the to-be-positioned UE arrives at the base station 1 and the base station 3 is $\Delta t_{31}$. The time difference of arrival $\Delta t_{21}$ is multiplied by the speed of light to obtain a distance difference L1, and the time difference of arrival $\Delta t_{21}$ is multiplied by the speed of light to obtain a distance difference L2. The LMF may obtain a hyperbola MN shown in FIG. 4 based on a function relationship among a location of the base station 1, a location of the base station 2, and the distance difference L1, and may obtain a hyperbola RS shown in FIG. 4 based on a function relationship among the location of the base station 1, a location of the base station 3, and the distance difference L2. Further, the LMF can position the to-be-positioned UE based on an intersection point of the hyperbola MN and the hyperbola RS.

It should be noted that, in FIG. 4, the three base stations are configured to position the terminal device. However, this is not limited in this application. In actual application, more than three base stations may be configured to position the terminal device.

In a related technical solution, a carrier phase positioning technology may be used to perform positioning measurement. In the carrier phase positioning technology, a distance with an integer ambiguity is measured through measurement on a carrier phase change of a reference signal from a transmitting side to a receiving side. A radio frequency signal with a frequency of 3 GHz is used as an example. A corresponding carrier wavelength is 0.1 m. Therefore, after an integer ambiguity of a carrier phase can be correctly solved, carrier phase ranging precision can theoretically reach a centimeter level to a millimeter level, to obtain a high-accuracy positioning result.

FIG. 5 is a diagram of carrier phase ranging. With reference to FIG. 5, d is a distance between a receiving side and a transmitting side, φ is a carrier phase measurement value, and N is a value of an integer ambiguity, and represents that a reference signal passes through N carrier integer cycles in space. λ is a carrier wavelength. The distance d and the carrier phase φ satisfy the following formula:

$$d = \lambda \left( N + \frac{\varphi}{2\pi} \right).$$

A positioning aid device may be referred to as an anchor node (anchor node), and the positioning aid node may send and/or measure a PRS or an SRS, to assist in positioning measurement on the to-be-positioned UE. The positioning aid device may be an anchor terminal device, a reference station (positioning reference unit, PRU), or the like.

The positioning aid device at a known location is configured to measure the PRS or the SRS, so that impact of a non-ideal factor can be eliminated according to a double-difference carrier phase method, thereby improving positioning accuracy. For example, the non-ideal factor may include a time synchronization error, a random initial phase error, a clock drift frequency offset, an engineering parameter error of a network device, and the like. In descriptions of carrier phase positioning in R18, the PRU is supported in assisting carrier phase measurement, to improve carrier phase positioning accuracy. With reference to FIG. 6, the following describes some embodiments of a double-difference carrier phase method by using downlink positioning as an example.

FIG. 6 is a diagram of performing positioning measurement by using a double-difference carrier phase method.

With reference to FIG. 6, it is assumed that a to-be-positioned UE (represented by using a circle in FIG. 4), a PRU (represented by using a square in FIG. 4), and a base station i (i is 1, 2, or 3) each have a time synchronization error and a random initial phase error. The to-be-positioned UE measures a PRS sent by the base station i (represented by using a solid-line arrow in FIG. 4), and the PRU measures a PRS sent by the base station i (represented by using a dashed-line arrow in FIG. 4). A phase measurement value of the to-be-positioned UE relative to the base station i may be determined by using the following formula:

$$\varphi_t^{(i)} = \left(-2\pi f\left(\tau_t^{(i)} + \Delta_t^{(i)}\right) - \left(\phi_t - \phi^{(i)}\right)\right) - 2\pi N_t^{(i)}.$$

$\varphi_t^{(i)}$ is the phase measurement value of the to-be-positioned UE relative to the base station i; $\tau_t^{(i)}$ is a transmission delay between the to-be-positioned UE and the base station i; $\Delta_t^{(i)}$ is a time synchronization error between the base station i and the UE; $\phi_t$ is a random initial phase error of the to-be-positioned UE; $\phi^{(i)}$ is a random initial phase error of the base station i; and $N_t^{(i)}$ is an integer ambiguity between the UE and the base station i.

Subtracting is performed between different base stations, to obtain a phase difference of arrival (phase difference of arrival, PDOA) related to the to-be-positioned UE. A specific formula is as follows:

$$\varphi_t^{(ij)} = \left(\varphi_t^{(j)} - \varphi_t^{(i)}\right) = \left(-2\pi f\left(\tau_t^{(ij)} + \Delta^{(ij)}\right) - \phi^{(ij)}\right) - 2\pi N_t^{(ij)}.$$

$\varphi_t^{(ij)}$ is a difference between a phase measurement value $\varphi_t^{(j)}$ of the to-be-positioned UE relative to a base station j (where j is 1, 2, or 3, and j is different from i) and the phase measurement value $\varphi_t^{(i)}$ of the to-be-positioned UE relative to the base station i; $\tau_t^{(ij)}$ is a difference between a transmission delay $\tau_t^{(j)}$ between the to-be-positioned UE and the base station j and the transmission delay $\tau_t^{(i)}$ between the to-be-positioned UE and the base station i; $\Delta^{(ij)}$ is a difference between a time synchronization error $\Delta_t^{(j)}$ between the base station j and the UE and the time synchronization error $\Delta_t^{(i)}$ between the base station j and the UE; $\phi^{(ij)}$ is a difference between a random initial phase error $\phi^{(j)}$ of the base station j and the random initial phase error $\phi^{(i)}$ of the base station i; and $N_t^{(ij)}$ is a difference between an integer ambiguity $N_t^{(j)}$ between the UE and the base station j and the integer ambiguity $N_t^{(i)}$ between the UE and the base station i.

The random initial phase $\phi_t$ of the to-be-positioned UE can be eliminated by using the foregoing formula. Similarly, a PDOA related to the PRU may be obtained by using the following formula:

$$\varphi_p^{(ij)} = \left(\varphi_p^{(j)} - \varphi_p^{(i)}\right) = \left(-2\pi f\left(\tau_p^{(ij)} + \Delta^{(ij)}\right) - \phi^{(ij)}\right) - 2\pi N_p^{(ij)}.$$

For parameters in the formula, refer to the descriptions of the formula for calculating $\varphi_t^{(ij)}$. In the formula, only a subscript t is replaced with a subscript p, and meanings of the parameters in the formula are not described again. Subtracting is performed between the PDOA related to the to-be-positioned UE and the PDOA related to the PRU, to obtain a double-difference PDOA. A specific formula is as follows:

$$\varphi_{tp}^{(ij)} = \left(\varphi_t^{(ij)} - \varphi_p^{(ij)}\right) = \left(-2\pi f \tau_{tp}^{(ij)}\right) - 2\pi N_{tp}^{(ij)}.$$

$\varphi_{tp}^{(ij)}$ is a difference between $\varphi_t^{(ij)}$ and $\varphi_p^{(ij)}$; $\tau_{tp}^{(ij)}$ is a difference between $\tau_t^{(ij)}$ and $\tau_p^{(ij)}$; and $N_{tp}^{(ij)}$ is a difference between $N_t^{(ij)}$ and $N_p^{(ij)}$.

A random initial phase error $\phi^{(ij)}$ and a time synchronization error $\Delta^{(ij)}$ on a base station side can be eliminated by using the formula, to determine $\tau_{tp}^{(ij)}$. A difference between a first distance difference and a second distance difference may be determined based on $\tau_{tp}^{(ij)}$. The first distance difference is a distance difference between a distance from the base station i to the to-be-positioned UE and a distance from the base station i to the PRU, and the second distance difference is a difference between a distance from the base station j to the to-be-positioned UE and a distance from the base station j to the PRU. In other words, a plurality of double-difference PDOAs may be obtained through introduction of more base stations or PRUs, and a location estimation result of the to-be-positioned UE may be obtained through solving with reference to location information of the PRU and location information of the base station.

For example, preliminary coarse positioning may be first performed on the to-be-positioned UE by using a positioning technology that is based on measured time of arrival or based on a measured angle of arrival, and a PRU that is close to the to-be-positioned UE may be determined. Then, the foregoing double-difference carrier phase positioning technology is further used to perform accurate positioning measurement on a location of the UE.

The random initial phase $\phi^{(i)}$ and the time synchronization error $\Delta^{(ij)}$ on the base station side are error items that change over time. Therefore, in the foregoing double-difference carrier phase positioning, the to-be-positioned UE and the PRU need to simultaneously measure the PRS sent by the base station, so that the random initial phase error $\phi^{(i)}$ and the time synchronization error $\Delta^{(ij)}$ on the base station side can be eliminated in the foregoing differential manner.

For example, the LMF may configure a measurement time window for the to-be-positioned UE or the PRU, and indicate the to-be-positioned UE or the PRU to perform positioning measurement within the measurement time window. Duration of the measurement time window may be 1, 2, 4, 6, 8, 12, or 16 slots (slots), and one or two measurement time windows may be configured. There may be resource sets on one or more frequencies within one measurement time window. The resource set herein may be a PRS resource, or may be an SRS resource. This is not limited in this application.

That PRS resources belong to one frequency may mean that these PRS resources (or PRS resource sets) belong to a same PFL. That SRS resources belong to a same frequency may mean that these SRS resources (SRS resource sets or BWPs) belong to a same CC.

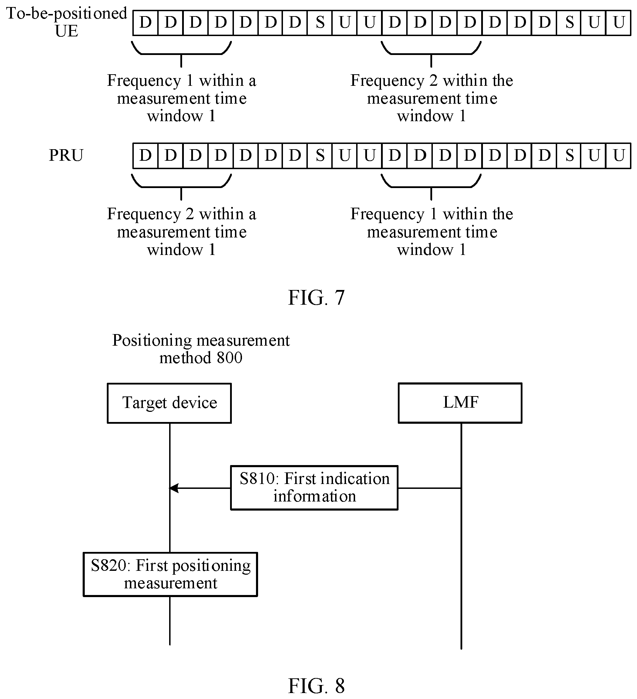

FIG. 7 is a diagram of configuring a measurement time window. With reference to FIG. 7, an upper part in FIG. 7 represents a time domain resource used by a to-be-positioned UE to perform transmission, where "D" represents a downlink transmission slot, "U" represents an uplink transmission slot, and "S" represents a flexible transmission slot.

Downlink positioning is used as an example. An LMF network element configures measurement time windows (time windows) for the to-be-positioned UE and a PRU, and indicates the to-be-positioned UE and the PRU to measure a PRS resource within the measurement time windows. When there are resource sets on a plurality of frequencies within the measurement time window configured by the LMF for the to-be-positioned UE or the PRU, the to-be-positioned UE and the PRU cannot simultaneously measure a PRS sent by a base station on a frequency.

It is assumed that the LMF configures one measurement time window for each of the UE and the PRU. The measurement time window is denoted as a measurement time window 1. The measurement time windows 1 are periodically distributed on time domain resources of the UE and the PRU, as shown in FIG. 7. PRS resources configured within the measurement time window 1 belong to two frequencies, which are respectively a frequency 1 and a frequency 2. In other words, there are PRS resources on the frequency 1 and the frequency 2 within the measurement time window 1. The to-be-positioned UE may select the PRS resource on the frequency 1 or the frequency 2 within the measurement time window 1 for measurement, and the PRU may also select the PRS resource on the frequency 1 or the frequency 2 within the measurement time window 1 for measurement.

In this case, the to-be-positioned UE and the PRU cannot simultaneously measure a PRS sent by the base station on a frequency. For example, the to-be-positioned UE measures the PRS resource on the frequency 1 within a 1st measurement time window 1, and measures the PRS resource on the frequency 2 within the measurement time window 1 in a next periodicity. The PRU measures the PRS resource on the frequency 2 within a 1st measurement time window 1, and measures the PRS resource on the frequency 1 within the measurement time window 1 in a next periodicity. In this way, time at which the to-be-positioned UE measures the PRS resource on the frequency 1 is different from time at which the PRU measures the PRS resource on the frequency 1, and time at which the to-be-positioned UE measures the PRS resource on the frequency 2 is different from time at which the PRU measures the PRS resource on the frequency 2. Consequently, the to-be-positioned UE and the PRU cannot eliminate, by using the double-difference carrier phase method, a non-ideal factor that changes over time, affecting positioning measurement accuracy.

Therefore, how to improve positioning measurement accuracy is an urgent problem to be resolved.

FIG. 8 is a schematic flowchart of a positioning measurement method 800 according to an embodiment of this application. According to the method 800, downlink positioning measurement accuracy can be improved. The following describes actions of the method 800 with reference to FIG. 8.

S810: A target device receives first indication information from an LMF, where the first indication information indicates a measurement time window, a PRS resource within the measurement time window belongs to at least one frequency, and the at least one frequency includes a target frequency. Correspondingly, the LMF sends the first indication information to the target device. The first indication information further indicates the target device to perform first positioning measurement on a PRS resource on the target frequency within the measurement time window.

In some embodiments, the target device includes a terminal device on which positioning measurement is to be performed and/or a positioning aid device. In other words, the LMF may send the first indication information to the terminal device, may send the first indication information to the positioning aid device, or may send the first indication information to the terminal device and the positioning aid device. There may be one or more positioning aid devices. The positioning aid device may be a PRU, or may be another device.

The first indication information may be carried in any message, for example, may be carried in assistant data (assistant data). The assistant data may further carry a configuration of some or all PRS resources, and may further carry coordinates of a network device (for example, coordinates of a gNB or coordinates of a TRP). For example, the first indication information may be carried in a positioning request, and the positioning request may be used to request the target device to measure a PRS resource.

The first indication information may indicate the measurement time window. However, this is not limited in this application. For example, the first indication information may carry an indication of the measurement time window, or the first indication information may include the measurement time window.

It may be understood that, PRS resources on one or more frequencies may be configured within each of a plurality of time windows, or no PRS resource may be configured. A time window in which at least one frequency is configured may be selected as the measurement time window.

In some embodiments, each PRS resource within the measurement time window belongs to the target frequency. In other words, each PRS resource within the measurement time window belongs to only one frequency. In other words, there is a PRS resource on only one frequency within the measurement time window.

That PRS resources belong to a same frequency may mean that the PRS resources belong to a same PFL. For example, PRS resources on the target frequency from one PFL. That PRS resources belong to a same frequency may alternatively mean that the PRS resources have a same absolute radio frequency channel number (absolute radio frequency channel number, ARFCN). For example, PRS resources on the target frequency have a same ARFCN. That PRS resources belong to a same frequency may alternatively mean that the PRS resources have a same frequency parameter (a point A). For example, PRS resources on the target frequency have a same point A.

When there are resource sets on a plurality of frequencies within a same measurement time window, the target device needs to separately measure and report the PRS resource sets on the plurality of frequencies during measurement and reporting. Consequently, processing complexity is high. In this embodiment of this application, each PRS resource within the measurement time window belongs to one frequency, so that processing complexity of performing positioning measurement by the target device can be reduced, thereby improving positioning measurement efficiency. In addition, the foregoing solution is applicable to a terminal device that can measure only one frequency within one measurement time window. This improves applicability of the positioning measurement method.

In some other embodiments, PRS resources within the measurement time window belong to a plurality of frequencies. The first indication information may indicate one of the plurality of frequencies as the target frequency.

The PRS resource may be a PRS resource or a PRS resource set (resource set). There may be one or more PRS resources within the measurement time window, or there may be one or more PRS resource sets within the measurement time window.

The first positioning measurement may be positioning measurement on a carrier phase, or may be positioning measurement on time. For example, a measurement result of the positioning measurement performed on the carrier phase may include a carrier phase (reference signal carrier phase, RSCP) of a reference signal resource set and/or a carrier phase difference (reference signal carrier phase difference, RSCPD) of the reference signal resource set. For another example, a measurement result of the positioning measurement performed on the time may include at least one of the following: relative time of arrival (relative time of arrival, RTOA), a reference signal time difference (reference signal time difference, RSTD), a receive-transmit time difference (Rx-Tx time difference) of the terminal device, a receive-transmit time difference (Rx-Tx time difference) of a base station, and the like.

S820: The target device performs the first positioning measurement on the PRS resource on the target frequency within the measurement time window based on the first indication information.

According to the foregoing solution, the LMF indicates, by using the first indication information, the target device to perform the first positioning measurement on the PRS resource on the target frequency within the measurement time window. This avoids the target device arbitrarily selecting a frequency from a plurality of frequencies within the measurement time window for positioning measurement, and prevents the target device from measuring different frequencies within a same measurement time window, thereby improving positioning measurement accuracy.

In some embodiments, S820 includes: The target device performs the first positioning measurement only on the PRS resource on the target frequency within the measurement time window.

In an example, the LMF may select a time window in which only one frequency is configured as the measurement time window. In this way, each PRS resource within the measurement time window indicated by the first indication information delivered by the LMF in S810 belongs to one frequency.

In another example, the LMF may select a time window in which a plurality of frequencies are configured as the measurement time window, and indicate one of the plurality of frequencies within the measurement time window as the target frequency.

According to the foregoing solution, the LMF may indicate the target device to perform positioning measurement only on the PRS resource on the target frequency within the measurement time window. This avoids a case in which the target device measures different frequencies within a same measurement time window, to improve positioning measurement accuracy.

In some embodiments, before the target device performs the first positioning measurement only on the PRS resource on the target frequency within the measurement time window, the method 800 further includes: The target device sends first capability information to the LMF, where the first capability information indicates that the target device is capable of measuring one frequency within the measurement time window. Correspondingly, the LMF receives the first capability information from the target device. The first indication information specifically indicates the target device to perform the first positioning measurement only on the PRS resource on the target frequency within the measurement time window.

It may be understood that, the target device may report that the target device is capable of measuring PRS resources on a maximum quantity of frequencies within one measurement time window, to help, through capability reporting (capability transfer), the LMF configure a quantity of frequencies within the measurement time window. For differentiation, when the target device can measure one frequency within the measurement time window, capability information reported by the target device is referred to as the first capability information.

According to the foregoing solution, when the target device can measure only one frequency within the measurement time window, the LMF may indicate the target device to perform positioning measurement only on the PRS resource on the target frequency within the measurement time window. The foregoing solution implements positioning measurement of a low-capability (for example, reduced capability, RedCap) target device, and is applicable to a terminal device that can measure only one frequency within one measurement time window. This improves applicability of the positioning measurement method.

In some embodiments, S820 includes: The target device performs the first positioning measurement preferentially on the PRS resource on the target frequency within the measurement time window.

In an example, the LMF may indicate one of the plurality of frequencies within the measurement time window as the target frequency, and indicate the target device to measure the PRS resource preferentially on the target frequency within the measurement time window. For example, there are a frequency 1 and a frequency 2 within a measurement time window 1, and it is assumed that the target frequency is the frequency 1. In this way, the target device may preferentially measure the frequency 1 within a 1st measurement time window, and measure the frequency 2 within the measurement time window 1 in a next periodicity. This avoids a case in which the target device measures different frequencies within a same measurement time window.

According to the foregoing solution, the LMF may indicate the target device to perform positioning measurement preferentially on the PRS resource on the target frequency within the measurement time window. This avoids a case in which the target device measures different frequencies within a same measurement time window, to improve positioning measurement accuracy.

In some embodiments, before the target device performs the first positioning measurement preferentially on the PRS resource on the target frequency within the measurement time window, the method 800 further includes: The target device sends second capability information to the LMF, where the second capability information indicates that the target device is capable of measuring a plurality of frequencies within the measurement time window. Correspondingly, the LMF receives the second capability information from the target device. The first indication information specifically indicates the target device to perform the first positioning measurement preferentially on the PRS resource on the target frequency within the measurement time window.

It may be understood that, the target device may report that the target device is capable of measuring PRS resources on a maximum quantity of frequencies within one measurement time window, to help, through capability reporting, the LMF configure a quantity of frequencies within the measurement time window. For differentiation, when the target device can measure a plurality of frequencies within the measurement time window, capability information reported by the target device is referred to as the second capability information.

According to the foregoing solution, when the target device can measure a plurality of frequencies within the measurement time window, the LMF may indicate the target device to perform positioning measurement preferentially on the PRS resource on the target frequency within the measurement time window. The foregoing solution avoids a case in which the target device measures different frequencies within a same measurement time window, to improve positioning measurement accuracy.

In some embodiments, PRS resources within the measurement time window belong to a plurality of frequencies, the first indication information further carries priorities, and the priorities indicate a sequence of performing the first positioning measurement on the plurality of frequencies within the measurement time window.

The PRS resources within the measurement time window belong to the plurality of frequencies, that is, the PRS resources within the measurement time window indicated by the first indication information delivered by the LMF may be resources on different frequencies. In other words, there may be cross-frequency resources within the measurement time window, and these resources belong to different PFLs or have different ARFCNs.

That the first indication information further carries the priorities may be understood as that the first indication information further indicates the priorities, or may be understood as that the first indication information further includes the priorities.

The priorities may be understood as frequency priorities of different frequencies within the measurement time window, and the priorities are a sequence of performing positioning measurement on PRS resources on different frequencies within the measurement time window. The target device may measure and report a plurality of frequencies within the measurement time window based on a sequence of priorities. For example, there are four frequencies {1, 2, 3, 4} and two measurement time windows {1, 2}. The measurement time window 1 includes PRS resources on the frequencies {1, 3}, and the measurement time window 2 includes PRS resources on the frequencies {2, 4}. If priorities {1, 2, 3, 4} of the frequencies are indicated, the target device may first measure the PRS resource on the frequency 1 and then measure the PRS resource on the frequency 3 within the measurement time window 1. When the target device includes a to-be-positioned UE and a positioning aid device, the to-be-positioned UE and the positioning aid device may simultaneously measure the PRS resources on the frequency 1 and the frequency 3. Similarly, for the measurement time window 2, the target device may first measure the PRS resource on the frequency 2 and then measure the PRS resource on the frequency 4. When the target device includes a to-be-positioned UE and a positioning aid device, in the foregoing solution, the to-be-positioned UE and the positioning aid device simultaneously measure the PRS resources on the frequency 2 and the frequency 4.

It should be noted that in this application, the priorities are not limited to indicating the sequence of performing the first positioning measurement on all frequencies within the measurement time window. For example, the priorities may indicate a sequence of performing the first positioning measurement on some frequencies within the measurement time window. For frequencies without priorities indicating a sequence, the target device may perform positioning measurement according to an existing solution, or may not perform positioning measurement. In other words, the target device may first measure, based on a sequence of priorities, PRS resources on frequencies indicated in the priorities, and then measure, based on a random sequence, PRS resources on frequencies not indicated in the priorities. Alternatively, the target device may measure, based on a sequence of priorities, only PRS resources on frequencies indicated in the priorities, and does not measure PRS resources on frequencies not indicated in the priorities.

According to the foregoing solution, the LMF indicates, by using the priorities, the target device to perform the first positioning measurement on the PRS resources on the plurality of frequencies within the measurement time window based on a specific sequence. This avoids the target device arbitrarily selecting a frequency from the plurality of frequencies within the measurement time window for positioning measurement, and prevents the target device from measuring different frequencies within a same measurement time window, thereby improving positioning measurement accuracy.

In some embodiments, the method 800 further includes: The target device receives second indication information from the LMF, where the second indication information indicates the target device to perform second positioning measurement on a plurality of PRS resources; and the target device preforms the second positioning measurement preferentially on the PRS resource on the target frequency in the plurality of PRS resources based on the second indication information and the first indication information. Correspondingly, the LMF sends the second indication information to the target device. The first indication information further indicates that second positioning measurement on the PRS resource on the target frequency is prioritized over second positioning measurement on a PRS resource on a frequency other than the target frequency.

The second indication information and the first indication information may be same indication information. In other words, one piece of indication information may indicate the target device to perform both the first positioning measurement and the second positioning measurement. In this way, the second indication information may also be referred to as the first indication information. It may alternatively be understood as that the second indication information and the first indication information are simultaneously delivered.

For example, the first indication information and the second indication information are carried in same information. It may alternatively be understood as that the first indication information and the second indication information are included in same information. For example, the first indication information and the second indication information may be carried in the assistant data or the positioning request, or may be carried in another message.

The second positioning measurement is similar to the first positioning measurement, and a difference lies in that, the second positioning measurement is measurement performed on a PRS resource, and is not limited to a PRS resource within the measurement time window. In other words, the second positioning measurement may be used to measure both a PRS resource within the measurement time window and a PRS resource outside the measurement time window. It should be understood that, a quantity of PRS resources on a time-frequency resource is generally greater than a quantity of PRS resources configured within the measurement time window. Therefore, a PRS resource on the time-frequency resource measured by the target device is greater than a PRS resource within the measurement time window, so that a finally determined measurement result of time is more accurate, and positioning on the terminal device is more accurate. Alternatively, because the target device may measure both a PRS resource within a time window and a PRS resource outside the time window, a quantity of measured PRS resources is greater than a quantity of PRS resources measured only within the measurement time window, so that a finally determined measurement result is more accurate, thereby improving overall positioning accuracy on the terminal device.

Correspondingly, the second positioning measurement is performed preferentially on the PRS resource on the target frequency in the plurality of PRS resources, which is not limited to the PRS resource on the target frequency within the measurement time window. In other words, the second positioning measurement may be used to measure both the PRS resource on the target frequency within the measurement time window and the PRS resource on the target frequency outside the measurement time window.

According to the foregoing solution, the target device measures the PRS resource preferentially on the target frequency. This avoids the target device arbitrarily selecting a frequency from a plurality of frequencies for positioning measurement, so that a case in which the target device measures different frequencies can be avoided, thereby improving positioning measurement accuracy. In addition, when performing the second positioning measurement, the target device is not limited to measuring the PRS resource on the target frequency within the measurement time window, so that a finally determined measurement result of the second positioning measurement is more accurate, thereby improving overall positioning accuracy on the terminal device.

In some embodiments, the PRS resource on the target frequency within the measurement time window is associated with information about a reference network device.

For example, it is assumed that there are three PRS resources on the target frequency, which are a PRS resource 1, a PRS resource 2, and a PRS resource 3 respectively. The target device respectively receives PRSs from a base station 1, a base station 2, and a base station 3 based on the PRS resource 1, the PRS resource 2, and the PRS resource 3, to implement positioning measurement on the PRS resource 1, the PRS resource 2, and the PRS resource 3. The base station 1 is a reference network device, and all the PRS resource 1, the PRS resource 2, and the PRS resource 3 are associated with information about the base station 1. In this way, the target device may perform differential processing on measurement results of the PRS resource 1 and the PRS resource 2, perform differential processing on measurement results of the PRS resource 1 and the PRS resource 3, and report, to the LMF, a measurement result obtained through differential processing.

If the PRS resource on the target frequency within the measurement time window is not associated with the information about the reference network device, the target device cannot determine a measurement result obtained through differential processing is performed based on the reference network device. The information about the reference network device cannot be determined, and the measurement result obtained through differential processing may not be based on a same reference network device. Consequently, only a measurement result of a single PRS resource can be reported. In this case, the target device needs to report a large quantity of measurement results, and the LMF needs to receive and process a large quantity of measurement results, increasing communication overheads and increasing processing burden on the LMF side.

According to the foregoing solution, the PRS resource on the target frequency within the measurement time window is associated with the information about the reference network device, so that the target device can report a measurement result obtained through differential processing is performed based on the reference network device. This avoids reporting a large quantity of measurement results for a single PRS to the LMF, thereby reducing communication overheads, and reducing processing burden on the LMF side.

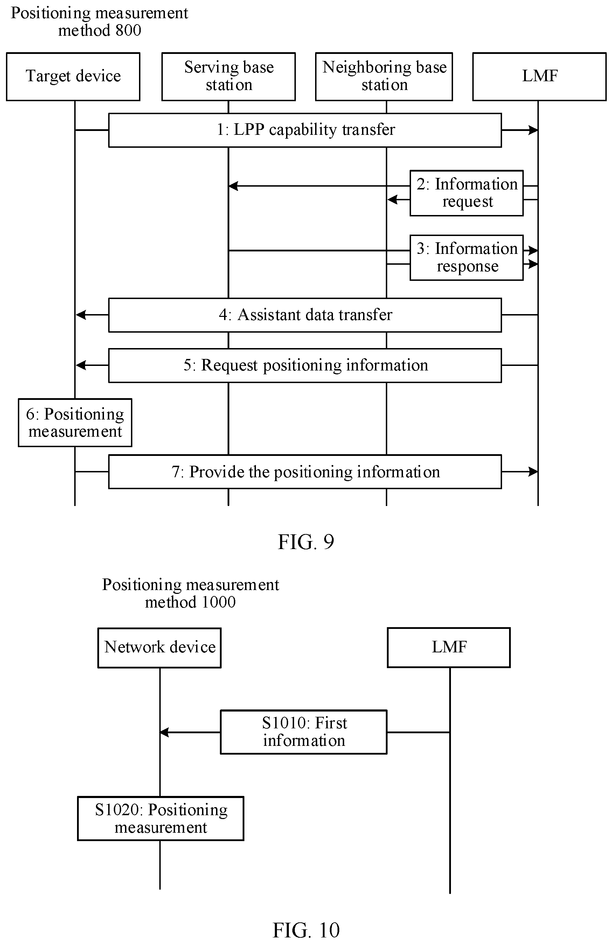

FIG. 9 is a schematic flowchart of another positioning measurement method 800 according to an embodiment of this application. The method 800 shown in FIG. 9 includes the following steps.

Step 1: An LMF obtains a capability of a target device in an LPP capability transfer (Capability Transfer) process. This step may be considered as capability reporting, and reported capability information may include that the target device is capable of measuring PRS resources or resource sets on a maximum quantity of frequencies within one measurement time window.

Step 2: The LMF sends an information request (information request) to a serving base station and a neighboring base station (for example, a gNB or a TRP), to request gNB/TRP information. The information to be requested includes cell information of the serving base station and the neighboring base station, coordinates of the serving base station and coordinates of the neighboring base station, IDs of the serving base station and the neighboring base station, a PRS resource configuration, and the like.

Step 3: The serving base station and the neighboring base station (for example, the gNB or the TRP) send information responses (information responses) to the LMF, to respond to the requested information. The response information includes the cell information of the serving base station and the neighboring base station, the coordinates of the serving base station and the coordinates of the neighboring base station, the IDs of the serving base station and the neighboring base station, the PRS resource configuration, and the like.

Step 4: The LMF transfers or provides assistant data to the target device, where the assistant data includes the PRS resource configuration. The assistant data may further include the coordinates of the serving base station and the coordinates of the neighboring base station. The assistant data may also be referred to as assistant information.

Step 5: The LMF sends request location information (request location information) to the target device, and requests the target to measure a PRS. The requested positioning information may include first indication information, and the first indication information indicates a measurement time window and a target frequency within the measurement time window. If there are a plurality of frequencies within the measurement time window, priorities of the frequencies may be further indicated.

It should be noted that the first indication information may alternatively be delivered in step 4, that is, carried in the assistant data.

Step 6: The target device measures the PRS and obtains a measurement result. For example, the measurement result may include an RSTD and an RSCPD. However, this is not limited in this application. For example, the measurement result may alternatively be another time measurement quantity or another carrier phase measurement quantity.

Step 7: The target device reports the measurement result to the LMF.

The foregoing describes some embodiments of downlink positioning with reference to FIG. 8 and FIG. 9, and the following describes some embodiments of uplink positioning.

FIG. 10 is a schematic flowchart of still another positioning measurement method 1000 according to an embodiment of this application. According to the method 1000, downlink positioning measurement accuracy can be improved. The following describes actions of the method 1000 with reference to FIG. 10.

S1010: An LMF sends first information to a network device, where the first information carries a measurement time window, an SRS resource within the measurement time window belongs to at least one frequency, and the at least one frequency includes a target frequency.

In some embodiments, the target device includes a serving base station of a terminal device on which positioning measurement is to be performed and/or a neighboring base station of the serving base station. In other words, the LMF may send the first information to the serving base station, may send the first information to the neighboring base station, or may send the first information to the serving base station and the neighboring base station. There may be one or more neighboring base stations. The neighboring base station may be a gNB, or may be another base station such as a TRP.

The first information is similar to the first indication information. A difference lies in that the first information is sent by the LMF to the network device, and the first indication information is sent by the LMF to a target device.

The first information may indicate the measurement time window. However, this is not limited in this application. For example, the first information may carry an indication of the measurement time window, or the first information may include the indication of the measurement time window. The meaning of the measurement time window is consistent with that described above. Details are not described herein.

The first information may be carried in any message, for example, may be carried in a measurement request (measurement request). The measurement request may further carry a configuration of some or all SRS resources.

It may be understood that, SRS resources on one or more frequencies may be configured within each of a plurality of time windows, or no SRS resource may be configured. A time window in which at least one frequency is configured may be selected as the measurement time window.

In some embodiments, each SRS resource within the measurement time window belongs to the target frequency. In other words, each SRS resource within the measurement time window belongs to only one frequency. In other words, there is an SRS resource on only one frequency within the measurement time window.

That SRS resources belong to a same frequency may mean that the SRS resources belong to a same CC. For example, SRS resources on the target frequency belong to a same CC. That SRS resources belong to a same frequency may alternatively mean that the SRS resources have a same ARFCN. For example, SRS resources on the target frequency have a same ARFCN. That SRS resources belong to a same frequency may alternatively mean that the SRS resources are on a same carrier (carrier). For example, SRS resources on the target frequency have a same carrier.

When there are resource sets on a plurality of frequencies within a same measurement time window, the network device needs to separately measure and report the SRS resource sets on the plurality of frequencies during measurement and reporting. Consequently, processing complexity is high. In this embodiment of this application, each SRS resource within the measurement time window belongs to one frequency, so that processing complexity of performing positioning measurement by the network device can be reduced, thereby improving positioning measurement efficiency.

In some other embodiments, SRS resources within the measurement time window belong to a plurality of frequencies. The first information may indicate one of the plurality of frequencies as the target frequency.

The SRS resource may be an SRS resource, an SRS resource set (resource set), or a BWP. The SRS resources within the measurement time window may be a plurality of SRS resources, or may be a plurality of SRS resource sets or a plurality of BWPs.

First positioning measurement may be positioning measurement on a carrier phase, or may be positioning measurement on time. For a specific meaning, refer to the foregoing descriptions of the first positioning measurement. Details are not described herein again.

S1020: The network device performs the first positioning measurement on the SRS resource on the target frequency within the measurement time window based on the first information.

According to the foregoing solution, the LMF indicates, by using the first information, the network device to perform the first positioning measurement on the SRS resource on the target frequency within the measurement time window. This avoids a case in which the network device randomly selects a frequency from a plurality of frequencies within the measurement time window for positioning measurement, so that a case in which each network device measures different frequencies within a same measurement time window can be avoided, thereby improving positioning measurement accuracy.

In some embodiments, S1020 includes: The network device performs the first positioning measurement only on the SRS resource on the target frequency within the measurement time window.

In an example, the LMF may select a time window in which only one frequency is configured as the measurement time window. In this way, each SRS resource within the measurement time window indicated by the first information delivered by the LMF belongs to one frequency.

In another example, the LMF may select a time window in which a plurality of frequencies are configured as the measurement time window, and indicate one of the plurality of frequencies within the measurement time window as the target frequency.

According to the foregoing solution, the LMF may indicate the network device to perform positioning measurement only on the SRS resource on the target frequency within the measurement time window. This avoids a case in which the network device measures different frequencies within a same measurement time window, to improve positioning measurement accuracy.

In some embodiments, S1020 includes: The network device performs the first positioning measurement preferentially on the SRS resource on the target frequency within the measurement time window.

In an example, the LMF may indicate one of the plurality of frequencies within the measurement time window as the target frequency, and indicate the network device to measure the SRS resource preferentially on the target frequency within the measurement time window. For example, there are a frequency 1 and a frequency 2 within a measurement time window 1, and it is assumed that the target frequency is 1. In this way, the network device may preferentially measure the frequency 1 within a 1st measurement time window, and measure the frequency 2 within the measurement time window 1 in a next periodicity. This avoids a case in which the network device measures different frequencies within a same measurement time window.

According to the foregoing solution, the LMF may indicate the network device to perform positioning measurement preferentially on the SRS resource on the target frequency within the measurement time window. The foregoing solution avoids a case in which the network device measures different frequencies within a same measurement time window, to improve positioning measurement accuracy.

In some embodiments, SRS resources within the measurement time window belong to a plurality of frequencies, the first information further carries priorities, and the priorities indicate a sequence of performing the first positioning measurement on the plurality of frequencies within the measurement time window.

The SRS resources within the measurement time window belong to the plurality of frequencies, that is, the SRS resources within the measurement time window indicated by the first information delivered by the LMF may be resources on different frequencies. In other words, there may be cross-frequency resources within the measurement time window, and these resources belong to different CCs, have different ARFCNs, or belong to different absolute frequencies. In this way, when carrier aggregation exists, that is, when there are a plurality of CCs within one measurement time window, the measurement time window also includes a plurality of frequencies.

That the first information further carries the priorities may be understood as that the first information further indicates the priorities, or may be understood as that the first information further includes the priorities.

The priorities may be understood as frequency priorities of different frequencies within the measurement time window, and the priorities are a sequence of performing positioning measurement on SRS resources on different frequencies within the measurement time window. The network device may measure and report a plurality of frequencies within the measurement time window based on a sequence of priorities. For example, there are four frequencies {1, 2, 3, 4} and two measurement time windows {1, 2}. The measurement time window 1 includes SRS resources on the frequencies {1, 3}, and the measurement time window 2 includes SRS resources on the frequencies {2, 4}. If priorities {1, 2, 3, 4} of the frequencies are indicated, the network device may first measure the SRS resource on the frequency 1 and then measure the SRS resource on the frequency 3 within the measurement time window 1. When the network device includes a serving base station and a neighboring base station, the serving base station and the neighboring base station may simultaneously measure the SRS resources on the frequency 1 and the frequency 3. Similarly, for the measurement time window 2, the network device may first measure the SRS resource on the frequency 2 and then measure the SRS resource on the frequency 4. When the network device includes a serving base station and a neighboring base station, in the foregoing solution, the serving base station and the neighboring base station simultaneously measure the SRS resources on the frequency 2 and the frequency 4.

It should be noted that in this application, the priorities are not limited to indicating the sequence of performing the first positioning measurement on all frequencies within the measurement time window. For example, the priorities may indicate a sequence of performing the first positioning measurement on some frequencies within the measurement time window. For frequencies without priorities indicating a sequence, the network device may perform positioning measurement according to an existing solution, or may not perform positioning measurement. In other words, the network device may first measure, based on a sequence of priorities, SRS resources on frequencies indicated in the priorities, and then measure, based on a random sequence, SRS resources on frequencies not indicated in the priorities. Alternatively, the network device may measure, based on a sequence of priorities, only SRS resources on frequencies indicated in the priorities, and does not measure SRS resources on frequencies not indicated in the priorities.

According to the foregoing solution, the LMF indicates, by using the priorities, the network device to perform the first positioning measurement on the SRS resources on the plurality of frequencies within the measurement time window based on a specific sequence. This avoids a case in which the network device randomly selects a frequency from the plurality of frequencies within the measurement time window for positioning measurement, so that a case in which the network device measures different frequencies within a same measurement time window can be avoided, thereby improving positioning measurement accuracy.

In some embodiments, the method further includes: The LMF sends second information to the network device, where the second information indicates the network device to perform second positioning measurement on a plurality of SRS resources; and the network device performs the second positioning measurement on the SRS resource on the target frequency in the plurality of SRS resources based on the second information and the first information.

The second information and the first information may be same indication information. In other words, one piece of information may indicate the network device to perform both the first positioning measurement and the second positioning measurement. In this way, the second information may also be referred to as the first information. It may alternatively be understood as that the second information and the first information are simultaneously delivered.

For example, the first information and the second information are carried in same information. It may alternatively be understood as that the first information and the second information are included in same information. For example, the first information and the second information may be carried in the measurement request, or may be carried in another message.

It should be noted that the second positioning measurement is measurement performed on an SRS resource, and is not limited to an SRS resource within a measurement time window. For descriptions of measuring the SRS resource through the second positioning measurement, refer to the foregoing descriptions of measuring the PRS resource. Details are not described herein again.

According to the foregoing solution, the network device measures the SRS resource preferentially on the target frequency. This avoids a case in which the network device randomly selects a frequency from a plurality of frequencies for positioning measurement, so that a case in which the network device measures different frequencies can be avoided, thereby improving positioning measurement accuracy. In addition, when performing the second positioning measurement, the network device is not limited to measuring the SRS resource on the target frequency within the measurement time window, so that a finally determined measurement result of the second positioning measurement is more accurate, thereby improving overall positioning accuracy on the terminal device.

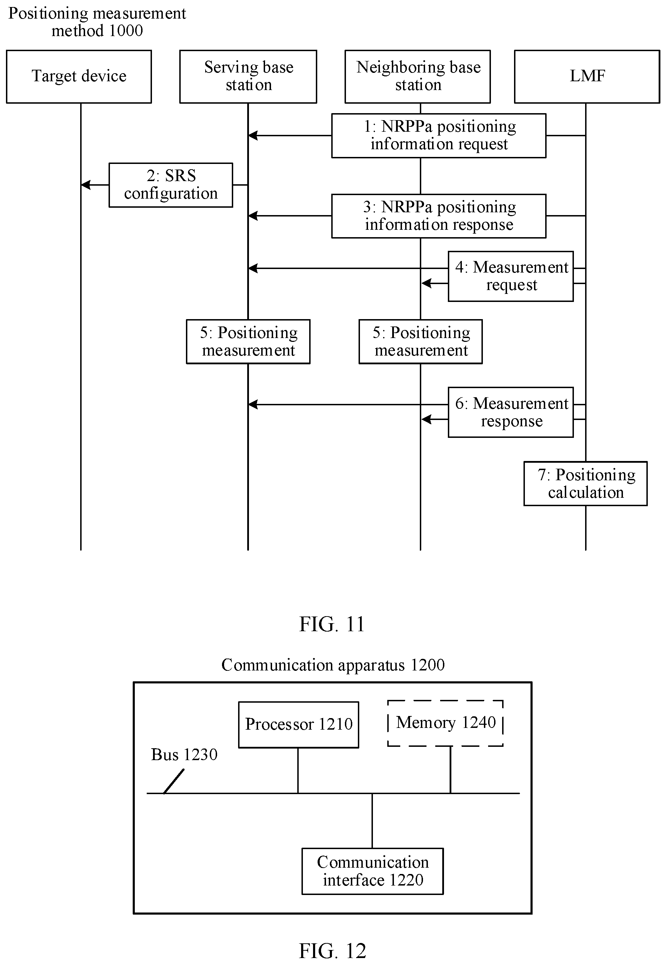

FIG. 11 is a schematic flowchart of yet another positioning measurement method 1000 according to an embodiment of this application. The method 1000 shown in FIG. 11 includes the following steps.

Step 1: An LMF sends a positioning information request (positioning information request) to a serving base station by using an NRPPa, to request to configure an SRS resource for a target.

Step 2: The serving base station determines an available SRS resource, and sends configuration information of the SRS resource to the target device.

Step 3: The serving base station sends a positioning information response (positioning information response) by using the NRPPa, and reports the configuration information of the SRS resource to the LMF.

Step 4: The LMF sends, by using the NRPPa, an SRS configuration to a base station (for example, a neighboring base station) participating in positioning, and sends a measurement request (measurement request). The measurement request may include first information, and the first information may indicate a measurement time window and a target frequency within the measurement time window. If there are a plurality of frequencies within the measurement time window, the first information may further indicate priorities of the frequencies.

Step 5: Each base station (for example, the serving base station and a plurality of neighboring base stations) measures (measuring) an SRS sent by the target device.

Step 6: Each base station sends a measurement response (measurement response) to the LMF based on measurement time information, to indicate measurement results of a carrier phase, time, and the like of the target device.

Step 7: The LMF performs location calculation (location calculation) on the terminal device based on the

**EP 4 765 886 A1**

measurement results.

The following describes apparatus embodiments corresponding to the method embodiments of this application. The following briefly describes only apparatuses. For specific implementation steps and details of the solutions, refer to the foregoing method embodiments.

To implement functions in the methods provided in this application, both a terminal device and a network device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

FIG. 12 is a block diagram of a communication apparatus 1200 according to an embodiment of this application. The communication apparatus 1200 includes a processor 1210 and a communication interface 1220. The processor 1210 and the communication interface 1220 may be connected to each other through a bus 1230. The communication apparatus 1200 may be a target device (for example, a terminal device or a PRU), may be a network device (for example, a serving base station or a neighboring base station), or may be an LMF.

Optionally, the communication apparatus 1200 may further include a memory 1240. The memory 1240 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 1240 is configured to store related instructions and data. The memory 1240 may be integrated with the processor 1210, or may be disposed separately.

The processor 1210 may be one or more central processing units (central processing units, CPUs). When the processor 1210 is one CPU, the CPU may be a single-core CPU or a multi-core CPU. The processor 1210 may be a signal processor, a chip, another integrated circuit that can implement the methods in this application, or a part of circuits that are in the foregoing processor, chip, or integrated circuit and that are configured to perform a processing function. In addition, the communication interface 1220 may alternatively be an input/output interface. The input/output interface is configured to input or output a signal or data, or may be an input/output circuit.

When the communication apparatus 1200 is the target device, for example, the processor 1210 is configured to perform the following operations: receiving first indication information from an LMF; and performing first positioning measurement on a PRS resource on a target frequency within a measurement time window based on the first indication information.

When the communication apparatus 1200 is the LMF, for example, the processor 1210 is configured to perform the following operation: sending first indication information to a target device.

When the communication apparatus 1200 is the network device, for example, the processor 1210 is configured to perform the following operations: receiving first information from an LMF; and performing first positioning measurement on an SRS resource on a target frequency within a measurement time window based on the first information.

The content is merely used as an example for description. When the communication apparatus 1200 is the terminal device or the network device, the communication apparatus 1200 is responsible for performing the methods or steps related to the terminal device or the network device in the foregoing method embodiments.

It may be understood that when the communication apparatus 1200 is the target device or the network device, the communication interface 1220 may also be referred to as a transceiver. The transceiver may include a transmitter and a receiver. The transmitter is configured to perform a sending operation, and the receiver is configured to perform a receiving operation. For example, the processor 1210 is configured to control the transceiver to receive the signal and/or send the signal.

It should be noted that the communication apparatus 1200 may include the transmitter but not include the receiver. Alternatively, the communication apparatus 1200 may include the receiver but not include the transmitter. This may be specifically determined depending on whether the foregoing solutions performed by the communication apparatus 1200 include a sending action and a receiving action.

The foregoing descriptions are merely examples. For specific content, refer to the content shown in the foregoing method embodiments. For implementations of the operations in FIG. 12, refer to the corresponding descriptions of the method embodiments shown in FIG. 8 to FIG. 11.

For example, the communication apparatus 1200 may be configured to perform the downlink positioning measurement solution shown in FIG. 8 or FIG. 9.

When the communication apparatus 1200 is the target device, the communication interface 1220 is configured to receive first indication information from an LMF, where the first indication information indicates a measurement time window, a positioning reference signal PRS resource within the measurement time window belongs to at least one frequency, and the at least one frequency includes a target frequency; and the processor 1210 is configured to perform first positioning measurement on a PRS resource on the target frequency within the measurement time window based on the first indication information.

When the communication apparatus 1200 is the LMF, the communication interface 1220 is configured to send first indication information to a target device, where the first indication information indicates a measurement time window, a positioning reference signal PRS resource within the measurement time window belongs to at least one frequency, the at least one frequency includes a target frequency, and the first indication information further indicates the target device to perform first positioning measurement on a PRS resource on the target frequency within the measurement time window.

For another example, the communication apparatus 1200 may be configured to perform the uplink positioning measurement solution shown in FIG. 10 or FIG. 11.

When the communication apparatus 1200 is the network device, the communication interface 1220 is configured to receive first information from an LMF, where the first information carries a measurement time window, a sounding reference signal SRS resource within the measurement time window belongs to at least one frequency, and the at least one frequency includes a target frequency; and the processor 1210 is configured to perform first positioning measurement on an SRS resource on the target frequency within the measurement time window based on the first information.

When the communication apparatus 1200 is the LMF, the communication interface 1220 is configured to send first information to a network device, where the first information carries a measurement time window, a sounding reference signal SRS resource within the measurement time window belongs to at least one frequency, and the at least one frequency includes a target frequency.

For details of other implementations, refer to the detailed descriptions of the embodiment shown in FIG. 8 or FIG. 9. Details are not described herein again. It should be understood that a specific process in which the components perform the foregoing corresponding process has been described in detail in the foregoing method embodiments. For brevity, details are not described herein again.

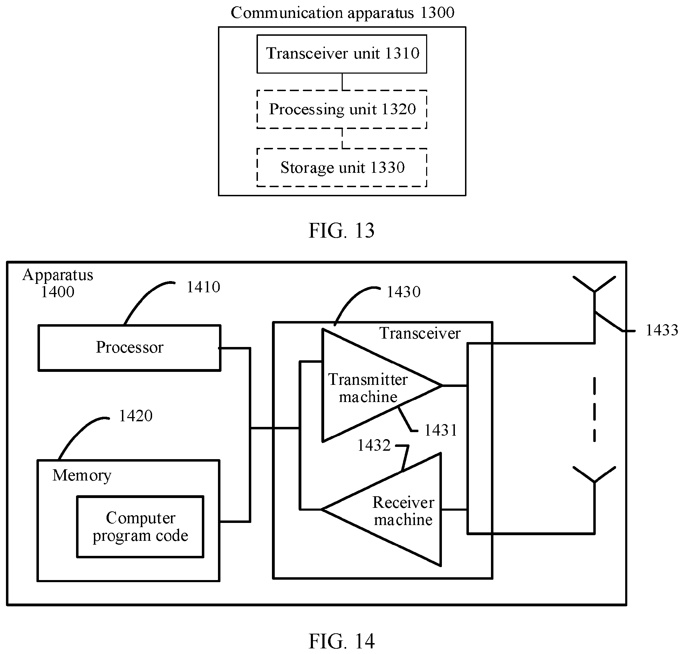

FIG. 13 is a block diagram of another communication apparatus 1300 according to an embodiment of this application. The communication apparatus 1300 may be a target device, a network device, or an LMF, or may be a chip or a module in the target device, the network device, or the LMF, and is configured to implement the methods in embodiments shown in FIG. 8 to FIG. 11. For details, refer to the related descriptions in the foregoing method embodiments.

The communication apparatus 1300 includes a transceiver unit 1310. The following describes the transceiver unit 1310 by using an example.

The transceiver unit 1310 may include a sending unit and a receiving unit. The sending unit is configured to perform a sending action of the communication apparatus, and the receiving unit is configured to perform a receiving action of the communication apparatus. For ease of description, in embodiments of this application, the sending unit and the receiving unit are combined into one transceiver unit. This is described herein once for all, and details are not described below again. The transceiver unit 1310 may implement a corresponding communication function. The transceiver unit 1310 may also be referred to as a communication interface or a communication module.

It should be noted that the communication apparatus 1300 may include the sending unit but not include the receiving unit. Alternatively, the communication apparatus 1300 may include the receiving unit but not include the sending unit. This may be specifically determined depending on whether the foregoing solutions performed by the communication apparatus 1300 include a sending action and a receiving action.

When the communication apparatus 1300 is the target device, for example, the transceiver unit 1310 is configured to receive first indication information and the like from an LMF.

Optionally, the communication apparatus 1300 may further include a processing unit 1320, configured to perform content related to steps such as processing and coordination of the target device.

When the communication apparatus 1300 is an LMF, for example, the transceiver unit 1310 is configured to send first indication information and the like to a target device.

Optionally, the communication apparatus 1300 may further include a processing unit 1320, configured to perform content related to steps such as processing and coordination of the LMF.

When the communication apparatus 1300 is the network device, for example, the transceiver unit 1310 is configured to receive first information and the like from an LMF.

Optionally, the communication apparatus 1300 may further include a processing unit 1320, configured to perform content related to steps such as processing and coordination of the network device.

The content is merely used as an example for description. When the communication apparatus 1300 is the target device, the LMF, or the network device, the communication apparatus 1300 is responsible for performing the methods or steps related to the target device, the LMF, or the network device in the foregoing method embodiments.

Optionally, the communication apparatus 1300 further includes a storage unit 1330. The storage unit 1330 is configured to store a program or code used for performing the foregoing methods. In other words, the storage unit 1330 may be configured to store instructions and/or data, and the processing unit 1320 may read the instructions and/or the data in the storage unit 1330, so that the communication apparatus 1300 implements the foregoing method embodiments. For example, the communication apparatus 1300 may be configured to perform the downlink positioning measurement solution shown in FIG. 8 or FIG. 9.

When the communication apparatus 1300 is the target device, the transceiver unit 1310 is configured to receive first indication information from an LMF, where the first indication information indicates a measurement time window, a positioning reference signal PRS resource within the measurement time window belongs to at least one frequency, and the at least one frequency includes a target frequency; and the processing unit 1320 is configured to perform first positioning measurement on a PRS resource on the target frequency within the measurement time window based on the first indication information.

When the communication apparatus 1300 is the LMF, the transceiver unit 1310 is configured to send first indication information to a target device, where the first indication information indicates a measurement time window, a positioning reference signal PRS resource within the measurement time window belongs to at least one frequency, the at least one frequency includes a target frequency, and the first indication information further indicates the target device to perform first positioning measurement on a PRS resource on the target frequency within the measurement time window.

For another example, the communication apparatus 1300 may be configured to perform the uplink positioning measurement solution shown in FIG. 8 or FIG. 9.

When the communication apparatus 1300 is the network device, the transceiver unit 1310 is configured to receive first information from an LMF, where the first information carries a measurement time window, a sounding reference signal SRS resource within the measurement time window belongs to at least one frequency, and the at least one frequency includes a target frequency; and the processing unit 1320 is configured to perform first positioning measurement on an SRS resource on the target frequency within the measurement time window based on the first information.

When the communication apparatus 1300 is the LMF, the transceiver unit 1310 is configured to send first information to a network device, where the first information carries a measurement time window, a sounding reference signal SRS resource within the measurement time window belongs to at least one frequency, and the at least one frequency includes a target frequency.

For details of other implementations, refer to the detailed descriptions of the embodiment shown in FIG. 10 or FIG. 11. Details are not described herein again. It should be understood that a specific process in which the components perform the foregoing corresponding process has been described in detail in the foregoing method embodiments. For brevity, details are not described herein again.

The apparatus embodiments shown in FIG. 12 and FIG. 13 are used to implement the content described in FIG. 8 to FIG. 11. For specific execution steps and methods of the apparatuses shown in FIG. 12 and FIG. 13, refer to the content described in the foregoing method embodiments.

This application further provides an apparatus 1400. The apparatus 1400 may be a target device, a processor in the target device, or a chip. The apparatus 1400 may be configured to perform operations performed by the target device in the foregoing method embodiments.

When the apparatus 1400 is the target device, FIG. 14 is a simplified diagram of a structure of the target device. As shown in FIG. 14, the target device includes a processor, a memory, and a transceiver. The memory may store computer program code. The transceiver includes a transmitter machine 1431, a receiver machine 1432, a radio frequency circuit (not shown in the figure), an antenna 1433, and an input/output apparatus (not shown in the figure).

The processor is mainly configured to: process a communication protocol and communication data, control the target device, execute a software program, process data of the software program, and the like.

The memory is mainly configured to store the software program and data.

The radio frequency circuit is mainly configured to: perform conversion between a baseband signal and a radio frequency signal, and process the radio frequency signal.

The antenna is mainly configured to receive and send a radio frequency signal in a form of an electromagnetic wave.

The input/output apparatus may include a touchscreen, a display, a keyboard, or the like. The input/output apparatus is mainly configured to: receive data input by a user, and output data to the user. It should be noted that some types of target devices may have no input/output apparatus.

When needing to send data, after performing baseband processing on the to-be-sent data, the processor outputs a baseband signal to the radio frequency circuit. Then, the radio frequency circuit performs radio frequency processing on the baseband signal and then sends a radio frequency signal to the outside in a form of an electromagnetic wave through the antenna. When data is sent to the target device, the radio frequency circuit receives the radio frequency signal through the antenna. The radio frequency circuit converts the radio frequency signal into a baseband signal, and outputs the baseband signal to the processor. The processor converts the baseband signal into data and processes the data. For ease of description, FIG. 14 shows only one memory, one processor, and one transceiver. In an actual target device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have sending and receiving functions may be considered as a transceiver module of the target device, and the processor that has a processing function may be considered as a processing module of the target device.

As shown in FIG. 14, the target device includes a processor 1410, a memory 1420, and a transceiver 1430. The processor 1410 may also be referred to as a processing unit, a processing board, a processing module, a processing apparatus, or the like. The transceiver 1430 may also be referred to as a transceiver unit, a transceiver machine, a transceiver apparatus, or the like.

Optionally, a component that is in the transceiver 1430 and that is configured to implement a receiving function may be considered as a receiving module, and a component that is in the transceiver 1430 and that is configured to implement a sending function may be considered as a sending module. In other words, the transceiver 1430 includes a receiver and a transmitter. The transceiver may also be sometimes referred to as a transceiver machine, a transceiver module, a transceiver circuit, or the like. The receiver may also be sometimes referred to as a receiver machine, a receiving module, a receiving circuit, or the like. The transmitter may also be sometimes referred to as a transmitter machine, a transmitting module, a transmitting circuit, or the like.

The processor 1410 is configured to perform a processing action on a target device side in the embodiments shown in FIG. 8 and FIG. 9. The transceiver 1430 is configured to perform receiving and sending actions on the target device side in the embodiments shown in FIG. 8 and FIG. 9.

When the apparatus 1400 is the chip, the chip includes a processor, a memory, and a transceiver. The transceiver may be an input/output circuit or a communication interface. The processor may be a processing module, a microprocessor, or an integrated circuit integrated on the chip. A sending operation performed by the target device in the foregoing method embodiments may be understood as an output of the chip, and a receiving operation performed by the target device in the foregoing method embodiments may be understood as an input of the chip.

This application further provides an apparatus 1500. The apparatus 1500 may be a network device or an LMF, or may be a chip of the network device or the LMF. The apparatus 1500 may be configured to perform operations performed by the network device or the LMF in the embodiments shown in FIG. 8 to FIG. 11.

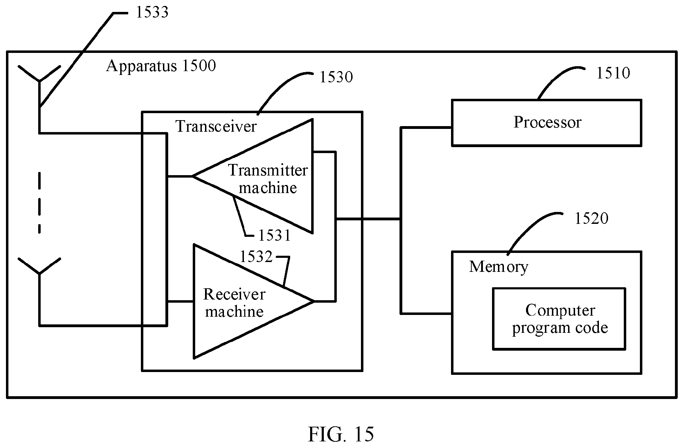

FIG. 15 is a simplified diagram of a structure. The apparatus 1500 includes a part 1510, a part 1520, and a part 1530.

The part 1510 is mainly configured to: perform baseband processing, control the base station, and the like. The part 1510 is usually a control center of the apparatus 1500, may be usually referred to as a processor, and is configured to control the apparatus 1500 to perform a processing operation on a network device side or an LMF side in the foregoing method embodiments.

The part 1520 is mainly configured to store computer program code and data.

The part 1530 is mainly configured to receive and send a radio frequency signal, and perform conversion between the radio frequency signal and a baseband signal. The part 1530 may be usually referred to as a transceiver module, a transceiver machine, a transceiver circuit, a transceiver, or the like. The transceiver module in the part 1530 may also be referred to as a transceiver machine, a transceiver, or the like, and includes an antenna 1533 and a radio frequency circuit (not shown in the figure). The radio frequency circuit is mainly configured to perform radio frequency processing. Optionally, a component that is configured to implement a receiving function and that is in the part 1530 may be considered as a receiver machine, and a component that is configured to implement a sending function and that is in the part 1530 may be considered as a transmitter machine. In other words, the part 1530 includes a receiver machine 1532 and a transmitter machine 1531. The receiver machine may also be referred to as a receiving module, a receiver, a receiving circuit, or the like, and the transmitter machine may be referred to as a transmitting module, a transmitter, a transmitting circuit, or the like.

The part 1510 and the part 1520 may include one or more boards, and each board may include one or more processors and one or more memories. The processor is configured to: read and execute a program in the memory to implement a baseband processing function and control the apparatus 1500. If there are a plurality of boards, the boards may be interconnected to enhance a processing capability. In an optional implementation, a plurality of boards may share one or more processors, a plurality of boards share one or more memories, or a plurality of boards share one or more processors at the same time.

For example, in an implementation, the transceiver module in the part 1530 is configured to perform a receiving and sending-related process performed by the LMF in the embodiments shown in FIG. 8 and FIG. 9. The processor in the part 1510 is configured to perform a processing-related process performed by the LMF in the embodiments shown in FIG. 8 and FIG. 9.

For example, in another implementation, the transceiver module in the part 1530 is configured to perform a receiving and sending-related process performed by the network device or the LMF in the embodiments shown in FIG. 10 and FIG. 11. The processor in the part 1510 is configured to perform a processing-related process performed by the network device or the LMF in the embodiments shown in FIG. 10 and FIG. 11.

When the apparatus 1500 is the chip, the chip includes a transceiver, a memory, and a processor. The transceiver may be an input/output circuit or a communication interface. The processor is a processor, a microprocessor, or an integrated circuit integrated on the chip. A sending operation performed by the network device or the LMF in the foregoing method embodiments may be understood as an output of the chip, and a receiving operation performed by the network device or the LMF in the foregoing method embodiments may be understood as an input of the chip.

This application further provides a chip, including a processor, configured to invoke instructions from a memory and run the instructions stored in the memory, to cause a communication apparatus on which the chip is installed to perform the method in the foregoing examples.

This application further provides another chip, including: an input interface, an output interface, and a processor. The input interface, the output interface, and the processor are connected through an internal connection path. The processor is configured to execute code in a memory; and when the code is executed, the processor is configured to perform the method in the foregoing examples. Optionally, the chip further includes the memory. The memory is configured to store a computer program or code.

This application further provides a processor, configured to be coupled to a memory, and configured to perform a method and a function of the network device, the LMF, or the target device in any one of the foregoing embodiments.

Another embodiment of this application provides a computer program product including a computer program or instructions. When the computer program product runs on a computer, the method in the foregoing embodiments is implemented.

This application further provides a computer program. When the computer program is run on a computer, the method in the foregoing embodiments is implemented.

Another embodiment of this application provides a computer-readable storage medium. The computer-readable storage medium stores a computer program. When the computer program is executed by a computer, the method in the foregoing embodiments is implemented.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division. In actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A positioning measurement method, comprising:

   receiving, by a target device, first indication information from a location management function LMF, wherein the first indication information indicates a measurement time window, a positioning reference signal PRS resource within the measurement time window belongs to at least one frequency, and the at least one frequency comprises a target frequency; and
   performing, by the target device, first positioning measurement on a PRS resource on the target frequency within the measurement time window based on the first indication information.

2. The method according to claim 1, wherein each PRS resource within the measurement time window belongs to the target frequency.

3. The method according to claim 1, wherein performing, by the target device, the first positioning measurement on the PRS resource on the target frequency within the measurement time window based on the first indication information comprises:
   performing, by the target device, the first positioning measurement only on the PRS resource on the target frequency within the measurement time window.

4. The method according to claim 3, wherein before performing, by the target device, the first positioning measurement only on the PRS resource on the target frequency within the measurement time window, the method further comprises:
   sending, by the target device, first capability information to the LMF, wherein the first capability information indicates that the target device is capable of measuring one frequency within the measurement time window.

5. The method according to claim 1, wherein performing, by the target device, the first positioning measurement on the PRS resource on the target frequency within the measurement time window based on the first indication information comprises:
   performing, by the target device, the first positioning measurement preferentially on the PRS resource on the target frequency within the measurement time window.

6. The method according to claim 5, wherein before performing, by the target device, the first positioning measurement preferentially on the PRS resource on the target frequency within the measurement time window, the method further comprises:
   sending, by the target device, second capability information to the LMF, wherein the second capability information indicates that the target device is capable of measuring a plurality of frequencies within the measurement time window.

7. The method according to claim 5 or 6, wherein PRS resources within the measurement time window belong to a plurality of frequencies, the first indication information further carries priorities, and the priorities indicate a sequence of performing the first positioning measurement on the plurality of frequencies within the measurement time window.

8. The method according to any one of claims 1 to 7, wherein the PRS resource on the target frequency belongs to a same positioning frequency layer PFL.

9. The method according to any one of claims 1 to 8, wherein the first indication information is carried in a positioning request or assistant data.

10. The method according to any one of claims 1 to 9, further comprising:

    receiving, by the target device, second indication information from the LMF, wherein the second indication information indicates the target device to perform second positioning measurement on a plurality of PRS resources; and
    performing, by the target device, the second positioning measurement preferentially on the PRS resource on the target frequency in the plurality of PRS resources based on the second indication information and the first indication information.

11. A positioning measurement method, comprising:
    sending, by a location management function LMF, first indication information to a target device, wherein the first indication information indicates a measurement time window, a positioning reference signal PRS resource within the measurement time window belongs to at least one frequency, the at least one frequency comprises a target frequency, and the first indication information further indicates the target device to perform first positioning measurement on a PRS resource on the target frequency within the measurement time window.

12. The method according to claim 11, further comprising:
receiving, by the LMF, first capability information from the target device, wherein the first capability information indicates that the target device is capable of measuring one frequency within the measurement time window, and the first indication information specifically indicates the target device to perform the first positioning measurement only on the PRS resource on the target frequency within the measurement time window.

13. The method according to claim 11, further comprising:
receiving, by the LMF, second capability information from the target device, wherein the second capability information indicates that the target device is capable of measuring a plurality of frequencies within the measurement time window, and the first indication information specifically indicates the target device to perform the first positioning measurement preferentially on the PRS resource on the target frequency within the measurement time window.

14. The method according to any one of claims 11 to 13, further comprising:
sending, by the LMF, second indication information to the target device, wherein the second indication information indicates the target device to perform second positioning measurement on a plurality of PRS resources, and the first indication information further indicates that second positioning measurement on the PRS resource on the target frequency is prioritized over second positioning measurement on a PRS resource on a frequency other than the target frequency.

15. A positioning measurement method, comprising:

sending, by a location management function LMF, first information to a network device, wherein the first information carries a measurement time window, a sounding reference signal SRS resource within the measurement time window belongs to at least one frequency, and the at least one frequency comprises a target frequency; and
performing, by the network device, first positioning measurement on an SRS resource on the target frequency within the measurement time window based on the first information.

16. The method according to claim 15, wherein each SRS resource within the measurement time window belongs to the target frequency.

17. The method according to claim 15, wherein performing, by the network device, the first positioning measurement on the SRS resource on the target frequency within the measurement time window based on the first information comprises:
performing, by the network device, the first positioning measurement only on the SRS resource on the target frequency within the measurement time window.

18. The method according to claim 15, wherein performing, by the network device, the first positioning measurement on the SRS resource on the target frequency within the measurement time window based on the first information comprises:
performing, by the network device, the first positioning measurement preferentially on the SRS resource on the target frequency within the measurement time window.

19. The method according to claim 18, wherein SRS resources within the measurement time window belong to a plurality of frequencies, the first information further carries priorities, and the priorities indicate a sequence of performing the first positioning measurement on the plurality of frequencies within the measurement time window.

20. The method according to any one of claims 15 to 19, wherein the SRS resource on the target frequency belongs to a same component carrier CC.

21. The method according to any one of claims 15 to 20, wherein the first information is carried in a measurement request.

22. The method according to any one of claims 15 to 21, further comprising:

sending, by the LMF, second information to the network device, wherein the second information indicates the network device to perform second positioning measurement on the plurality of SRS resources; and

performing, by the network device, the second positioning measurement preferentially on the SRS resource on the target frequency in the plurality of SRS resources based on the second information and the first information.

23. A communication apparatus, comprising a processor, wherein the processor is configured to cause, by executing a computer program or instructions or by using a logic circuit,

the communication apparatus to perform the method according to any one of claims 1 to 10, or
the communication apparatus to perform the method according to any one of claims 11 to 14, or
the communication apparatus to perform the method according to any one of claims 15 to 22.

24. A computer-readable storage medium, wherein the computer-readable storage medium stores a computer program or instructions, and when the computer program or the instructions are run on a computer,

the method according to any one of claims 1 to 10 is performed, or
the method according to any one of claims 11 to 14 is performed, or
the method according to any one of claims 15 to 22 is performed.

25. A communication apparatus, wherein the communication apparatus comprises:

a transceiver unit, configured to receive first indication information from a location management function LMF, wherein the first indication information indicates a measurement time window, a positioning reference signal PRS resource within the measurement time window belongs to at least one frequency, and the at least one frequency comprises a target frequency; and
a processing unit, configured to perform first positioning measurement on a PRS resource on the target frequency within the measurement time window based on the first indication information.

26. The communication apparatus according to claim 25, wherein the processing unit is specifically configured to:
perform the first positioning measurement only on the PRS resource on the target frequency within the measurement time window.

27. The communication apparatus according to claim 26, wherein the transceiver unit is further configured to:
send first capability information to the LMF, wherein the first capability information indicates that the target device is capable of measuring one frequency within the measurement time window.

28. The communication apparatus according to claim 25, wherein the processing unit is specifically configured to:
perform the first positioning measurement preferentially on the PRS resource on the target frequency within the measurement time window.

29. The communication apparatus according to claim 28, wherein the transceiver unit is further configured to:
send second capability information to the LMF, wherein the second capability information indicates that the target device is capable of measuring a plurality of frequencies within the measurement time window.

30. The communication apparatus according to any one of claims 25 to 29, wherein the transceiver unit is further configured to:
receive second indication information from the LMF, wherein the second indication information indicates the target device to perform second positioning measurement on a plurality of PRS resources, wherein the processing unit is further configured to:
perform the second positioning measurement preferentially on the PRS resource on the target frequency in the plurality of PRS resources based on the second indication information and the first indication information.

31. A communication apparatus, comprising:
a transceiver unit, configured to send first indication information to a target device, wherein the first indication information indicates a measurement time window, a positioning reference signal PRS resource within the measurement time window belongs to at least one frequency, the at least one frequency comprises a target frequency, and the first indication information further indicates the target device to perform first positioning measurement on a PRS resource on the target frequency within the measurement time window.

32. The communication apparatus according to claim 31, wherein the transceiver unit is further configured to:
receive first capability information from the target device, wherein the first capability information indicates that the target device is capable of measuring one frequency within the measurement time window, and the first indication information specifically indicates the target device to perform the first positioning measurement only on the PRS resource on the target frequency within the measurement time window.

33. The communication apparatus according to claim 31, wherein the transceiver unit is further configured to:
receive second capability information from the target device, wherein the second capability information indicates that the target device is capable of measuring a plurality of frequencies within the measurement time window, and the first indication information specifically indicates the target device to perform the first positioning measurement preferentially on the PRS resource on the target frequency within the measurement time window.

34. The communication apparatus according to any one of claims 31 to 33, wherein the transceiver unit is further configured to:
send second indication information to the target device, wherein the second indication information indicates the target device to perform second positioning measurement on a plurality of PRS resources, and the first indication information further indicates that second positioning measurement on the PRS resource on the target frequency is prioritized over second positioning measurement on a PRS resource on a frequency other than the target frequency.

FIG. 1

FIG. 2

EP 4 765 886 A1

Positioning measurement
method 300

FIG. 3

FIG. 4

FIG. 5

FIG. 6

To-be-positioned UE

| D | D | D | D | D | D | D | S | U | U | D | D | D | D | D | D | D | S | U | U |

Frequency 1 within a measurement time window 1

Frequency 2 within the measurement time window 1

PRU

| D | D | D | D | D | D | D | S | U | U | D | D | D | D | D | D | D | S | U | U |

Frequency 2 within a measurement time window 1

Frequency 1 within the measurement time window 1

FIG. 7

Positioning measurement method 800

| Target device | | LMF |

S810: First indication information

S820: First positioning measurement

FIG. 8

Positioning measurement
method 800

FIG. 9

Positioning measurement
method 1000

FIG. 10

Positioning measurement
method 1000

| Target device | Serving base station | Neighboring base station | LMF |
|---|---|---|---|

1: NRPPa positioning
information request

2: SRS
configuration

3: NRPPa positioning
information response

4: Measurement
request

5: Positioning
measurement

5: Positioning
measurement

6: Measurement
response

7: Positioning
calculation

FIG. 11

Communication apparatus 1200

Processor 1210

Memory 1240

Bus 1230

Communication
interface 1220

FIG. 12

Communication apparatus 1300

Transceiver unit 1310

Processing unit 1320

Storage unit 1330

FIG. 13

Apparatus 1400

1410

Processor

1420

Memory

Computer program code

1430

Transceiver

Transmitter machine

1431

1432

Receiver machine

1433

FIG. 14

FIG. 15

## INTERNATIONAL SEARCH REPORT

| International application No. |
| --- |
| **PCT/CN2024/117411** |

### A. CLASSIFICATION OF SUBJECT MATTER

H04W 4/02(2018.01)i

According to International Patent Classification (IPC) or to both national classification and IPC

### B. FIELDS SEARCHED

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

3GPP, CNTXT, ENTXT, DWPI, ENTXTC: 参考信号, 测量, 窗, 定位, 频点, 频率, 时间窗, 能力, 优先级, LMF, reference signal, measur+, window, bin, frequency, point, proposal, PRS, position+, ability, priority

### C. DOCUMENTS CONSIDERED TO BE RELEVANT

| Category* | Citation of document, with indication, where appropriate, of the relevant passages | Relevant to claim No. |
| --- | --- | --- |
| X | CN 114629605 A (VIVO MOBILE COMMUNICATION CO., LTD.) 14 June 2022 (2022-06-14) description, paragraphs [33]-[278] | 1-34 |
| X | CN 115884384 A (VIVO MOBILE COMMUNICATION CO., LTD.) 31 March 2023 (2023-03-31) description, paragraphs [53]-[496] | 1-34 |
| A | CN 116634351 A (HUAWEI TECHNOLOGIES CO., LTD.) 22 August 2023 (2023-08-22) entire document | 1-34 |
| A | WO 2022204628 A1 (QUALCOMM INC.) 29 September 2022 (2022-09-29) entire document | 1-34 |
| A | OPPO. "Discussion on Positioning for UE in RRC_INACTIVE and On-Demand PRS" *3GPP TSG RAN WG1 #106-e, R1-2107218*, 27 August 2021 (2021-08-27), entire document | 1-34 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **11 December 2024** | **23 December 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/117411**

| Patent document cited in search report | | | Publication date (day/month/year) | Patent family member(s) | | | Publication date (day/month/year) |
|---|---|---|---|---|---|---|---|
| CN | 114629605 | A | 14 June 2022 | WO | 2022122024 | A1 | 16 June 2022 |
| | | | | EP | 4239929 | A1 | 06 September 2023 |
| | | | | US | 2023319771 | A1 | 05 October 2023 |
| CN | 115884384 | A | 31 March 2023 | None | | | |
| CN | 116634351 | A | 22 August 2023 | None | | | |
| WO | 2022204628 | A1 | 29 September 2022 | TW | 202239249 | A | 01 October 2022 |
| | | | | JP | 2024511058 | A | 12 March 2024 |
| | | | | EP | 4315662 | A1 | 07 February 2024 |
| | | | | US | 2024089906 | A1 | 14 March 2024 |
| | | | | KR | 20230161438 | A | 27 November 2023 |
| | | | | BR | 112023018699 | A2 | 24 October 2023 |
| | | | | US | 2023094358 | A1 | 30 March 2023 |
| | | | | CN | 117044132 | A | 10 November 2023 |
| | | | | IN | 202327048086 | A | 15 December 2023 |
| | | | | VN | 100709 | A | 25 January 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311270473